# EUROPEAN PATENT APPLICATION

(11) **EP 2 639 547 A2**
(43) Date of publication of application: **18.09.2013**
(21) Application number: 13156557.4
(22) Date of filing: 25.02.2013
(51) Int. Cl.: G01C 11/00

(54) **Picture data provision system, picture data provision method, and computer program product**

(30) Priority: 12.03.2012 JP 2012054353
(71) Applicant: AISIN AW CO., LTD., Anjo-shi, Aichi 444-1192 (JP)
(72) Inventor: Fujiwara, Ryoichi, Anjo-shi, Aichi 444-1192 (JP); Nagase, Kenji, Anjo-shi, Aichi 444-1192 (JP)
(74) Representative: TBK

(57) **Abstract**

A picture data provision system providing picture data of ground surface photographed from high in a sky to a picture using device comprises means for determining a recognition difficult portion based on determination target picture data that is target to determine whether to provide, the recognition difficult portion being a portion of the determination target picture data where the ground surface is difficult to recognize, means for determining whether the determination target picture data is recognized as provision target picture data that is target to provide to the picture using device, based on feature information and a determination result of the recognition difficult portion of the determination target picture data, and means for providing the provision target picture data to the picture using device.

## Description

### BACKGROUND OF THE INVENTION

### 1. Field of the Invention

The present invention relates to a picture data provision system, a picture data provision, and a computer program product that provides picture data of ground surface photographed from high in a sky to a picture using device.

### 2. Description of the Related Art

In connection with control devices as mentioned above, for example, a technology described in Japanese Patent Application; Publication No. JP-A-2003-98957 is already known. In the technology described in Japanese Patent Application; Publication No. JP-A-2003-98957, the picture is photographed from high in the sky by dropping a camera from an airplane when it is difficult to take aerial photographs from the height the airplane is flying because of deep clouds.

In the technology of Japanese Patent Application; Publication No. JP-A-2003-98957, it is possible to take pictures of ground surface even when there are many clouds in the air. However, a special technique for dropping a camera from an airplane is required, which causes an increase in its cost.

There are cases, in which, when providing picture data of ground surface photographed by an airplane or an artificial satellite, the picture data in which the ground surface is difficult to recognize due to clouds and the like is required to be excluded from provision target. The inventor noted that, when importance levels of features existing in the ground surface area corresponding to a recognition difficult portion of the picture data are low, the picture data would be less required to be excluded from the provision target. However, the inventor also noted that it would not be easy to determine, from the picture data, the importance levels of the features existing in the ground surface area which is difficult to recognize. For example, the information of the features existing in the ground surface area corresponding to the recognition difficult portion may not be obtained from the photographed picture data because the ground surface is difficult to recognize due to clouds or the like. Or, it may be necessary to determine the features by complicated image processing or human manual determinations in order to obtain the information of the features corresponding to the recognition difficult portion from the past picture data. Thereby, the determination cost may considerably increase or the improvement of the determination accuracy may be limited.

### SUMMARY OF THE INVENTION

Therefore, picture data provision systems are in demand, which are capable of, in a method at a low cost with high accuracy, determining whether to provide picture data to picture using devices depending on features on ground surface where the recognition is difficult due to clouds or the like.

According to an aspect of the present invention, there is provided a picture data provision system providing picture data of ground surface photographed from high in a sky including: a recognition difficult portion determining unit adapted to determine a recognition difficult portion based on determination target picture data that is target to determine whether to provide, the recognition difficult portion being a portion of the determination target picture data where the ground surface is difficult to recognize; a provision determining unit adapted to determine whether the determination target picture data is recognized as provision target picture data that is target to provide to the picture using device, based on feature information and a determination result of the recognition difficult portion determining unit of the determination target picture data, the feature information being information regarding a feature included in determination corresponding map data and including position information of each feature, the determination corresponding map data being map data of a ground surface area corresponding to the determination target picture data; and a picture data providing unit adapted to provide the provision target picture data to the picture using device.

According to such configuration, it is possible to acquire the information of the feature existing in the ground surface area corresponding to the recognition difficult portion of the determination target picture data, not directly from the picture data but indirectly from the map data of the ground surface corresponding to the determination target picture data.
When the information of the feature is acquired directly from the picture data, the information of the feature existing in the recognition difficult portion may not be acquired from the determination target picture data. To acquire the information of the feature existing in the recognition difficult portion from past picture data, it may be necessary to determine the feature by a complicated image process or a manual judgment by a person, which may drastically increase a determination cost or limit the improvement in the determination accuracy.
On the other hand, according to the above configuration, it is possible to acquire the feature information existing in the ground surface area corresponding to the recognition difficult portion from the map data even when there is a portion difficult to recognize in the determination target picture data, because the map data is not influenced by an environmental change such as clouds. In addition, a complicated image process or a manual judgment by a person is not necessary as is necessary for the picture data as mentioned above. Further, it is possible to acquire the feature information from the map data at a low cost with high accuracy. In addition, because it is possible to acquire the information of the feature from the map data at a low cost with high accuracy, it is possible to determine whether the determination target picture data is recognized as the provision target picture data, based on the information of the feature and the determination result of the recognition difficult portion, at a low cost with high accuracy.

It is preferred that the picture data provision system includes a portion importance level determining unit adapted to determine an importance level of each portion of the determination target picture data based on the feature information; and a picture data rating unit adapted to calculate a rating of the determination target picture data based on the determination result of the recognition difficult portion and the importance level of each portion of the determination target picture data such that the rating decreases as the importance level of the recognition difficult portion increases, wherein the provision determining unit determines based on the rating whether the determination target picture data is recognized as the provision target picture data.

When the feature existing in the recognition difficult portion of the determination target picture data is important, it is preferable to determine the determination target picture data as not being target to provide to the picture using device because the information required by the picture using device may be difficult to recognize.
According to the above configuration, it is possible to calculate a lower rating for the determination target picture data as the importance level of the feature existing in the recognition difficult portion is higher. Consequently, it is possible to determine the determination target picture data with a low rating as not being provision target, and determine the determination target picture data with a high rating as the provision target picture data. Thus, it is possible to provide to the picture using device, useful determination target picture data, in which the information required by the picture using device is less likely to be difficult to recognize.

It is preferred that the picture data rating unit is adapted to calculate a rating of past picture data based on the determination result of the recognition difficult portion and the importance level of each portion such that the rating decreases as the importance level of the recognition difficult portion increases, the past picture data being picture data of the ground surface area corresponding to the determination target picture data provided earlier than the determination target picture data, and the provision determining unit is adapted to determine whether the determination target picture data is recognized as the provision target picture data, based on a comparison result between the rating of the determination target picture data and the rating of the past picture data.

When the rating of the determination target picture data is higher than the rating of the picture data provided to the picture using device in the past, the determination target picture data is likely to be useful for the picture using device. Therefore, it is preferable to provide the determination target picture data to the picture using device.
According to the above configuration, it is possible to provide the determination target picture data to the picture using device when the determination target picture data is likely to be more useful than the picture data provided in the past, such as when the rating of the determination target picture data is higher than the past picture data.

It is preferred that the picture data provision system includes a map data difference determining unit adapted to determine a difference between the determination corresponding map data and past corresponding map data that is map data of a ground surface area corresponding to the past picture data, wherein: when it has been determined that there is the difference, the provision determining unit is adapted to determine whether the determination target picture data is recognized as the provision target picture data, based on a comparison result between the rating of the determination target picture data and a predetermined determination criterion; and when it has been determined that there is not the difference, the provision determining unit is adapted to determine whether the determination target picture data is recognized as the provision target picture data, based on a comparison result between the rating of the determination target picture data and the rating of the past picture data.

When there is a change between the feature photographed in the determination target picture data and the feature photographed in the picture data provided in the past, the utility of the determination target picture data for the picture using device becomes high. When there is a change between the feature in the determination target picture data and the feature in the past picture data, if the rating of the determination target picture data is high, it is preferable to provide the determination target picture data to the picture using device. On the other hand, even when there is no change between the feature in the determination target picture data and the feature in the past picture data, if the rating of the determination target picture data is higher than the rating of the past picture data, it is preferable to provide the determination target picture data to the picture using device.
According to the above configuration, it is possible to indirectly determine the difference in the picture data by comparing the determination corresponding map data corresponding to the determination target picture data with the past corresponding map data corresponding to the past picture data instead of directly determine the difference in the picture data by comparing the determination target picture data with the past picture data.
When comparing the picture data, the determination cost for the difference may considerably increase or the determination accuracy of the difference may decrease under the influence of an environmental change such as climate, season, or the like, due to different photographed times. Therefore, it may be determined that there is the difference for unchanged picture data, or it may be determined that there is no difference for changed picture data.
On the other hand, the map data does not change due to an environmental change such as climate, season, or the like, but changes due to a change in a feature such as a road, a facility, or the like. Therefore, by comparing the map data, it is possible to determine a change in a feature on the ground surface without influence of an environmental change, increase the determination accuracy for difference, and decrease the determination cost for difference. Thereby, it is possible to determine the determination target picture data, in which there is a change in a feature on the ground surface, at a low cost with high accuracy.
According to the above configuration, when it has been determined that there is a difference, if the utility of the determination target picture data is likely to be higher than a certain criterion as a case in which the rating of the determination target picture data is higher than a predetermined determination criterion, it is possible to provide the determination target picture data to the picture using device. On the other hand, when it has been determined that there is no difference, if the utility of the determination target picture data is higher than the picture data provided in the past as a case in which the rating of the determination target picture data is higher than that of the past picture data, it is possible to provide the determination target picture data to the picture using device.
Consequently, it is possible to provide the picture data having a change in feature as much as possible under the condition that the recognition of important features is secured. In addition, it is possible to provide the picture data without a change in feature under the condition that the recognition of important features is improved compared to the picture data provided in the past.

It is preferred that the feature information further includes attribute information indicating an attribute of each feature, and the portion importance level determining unit is adapted to determine the importance level of each portion of the determination target picture data based on the attribute of the feature included in each portion of the determination corresponding map data.

The attribute of the feature included in the feature information is highly related to the utility for the picture using device. Therefore, according to the above configuration, it is possible to determine the rating of the determination target picture data accurately.
In addition, according to the above feature, it is possible to set the importance level efficiently according to the attribute of the feature included in the feature information, thereby the processing load of the picture data provision system can be decreased.

It is preferred that the feature includes a road and/or a facility; the feature information includes at least one of a road type, a number of lanes, and a road width as the attribute information indicating the attribute of the road and/or at least one of a facility type and a facility dimension as the attribute information indicating the attribute of the facility; and the portion importance level determining unit is adapted to determine the importance level based on at least one of the road type, the number of lanes, and the road width of a road included in each portion of the determination corresponding map data and/or at least one of the facility type and the facility dimension of a facility included in each portion of the determination corresponding map data

Generally, the roads and facilities among features are likely to be important information for the user of the picture using device. In addition, the road type, the number of lanes, and the road width among the road attribute are likely to be useful information in determining the importance (utility) for the user of the picture using device. In addition, the facility type and the facility dimension among the facility attribute are likely to be useful information in determining the importance (utility) for the user of the picture using device.
Consequently, according to the above configuration, it is possible to make the rating of the determination target picture data more accurate for the user of the picture using device.

It is preferred that the portion importance level determining unit is adapted to determine a portion score as the importance level of each portion based on the feature information of the feature included in the determination corresponding map data, and the picture data rating unit is adapted to calculate a total score based on a total of the portion score corresponding to each recognition difficult portion and calculates the rating based on the total score.

According to such configuration, it is possible to calculate the rating of the determination target picture data in a simple method of determining the portion score as the importance level of each portion and performing a comparison using the total score calculated based on the total of the portion score corresponding to the recognition difficult portion.

It is preferred that the portion importance level determining unit is adapted to determine the importance level of each portion, the portion being an area set by dividing the determination target picture data in a reticular pattern.

According to such configuration, the importance level of each portion is determined for each area set by dividing the determination target picture data in a reticular pattern. Therefore, it is possible to simplify the process.

The technical features of the picture data provision system according to the present invention provided with the aforementioned respective configurations are applicable to a picture data provision program and a picture data provision method. Therefore, such program and method may be included in the scope of the right of the present invention.

There is provided a computer program product including a program for a processing device, comprising software code portions for performing the functions of: determining a recognition difficult portion based on determination target picture data that is target to determine whether to provide, the recognition difficult portion being a portion of the determination target picture data where the ground surface is difficult to recognize; determining whether the determination target picture data is recognized as provision target picture data that is target to provide to the picture using device, based on feature information and a determination result of the recognition difficult portion of the determination target picture data, the feature information being information regarding a feature included in determination corresponding map data and including position information of each feature, the determination corresponding map data being map data of a ground surface area corresponding to the determination target picture data; and providing the provision target picture data to the picture using device.

There is provided a picture data provision method to provide picture data of ground surface photographed from high in a sky to a picture using device, the picture provision method comprising the steps of: determining a recognition difficult portion based on determination target picture data that is target to determine whether to provide, the recognition difficult portion being a portion of the determination target picture data where the ground surface is difficult to recognize; determining whether the determination target picture data is recognized as provision target picture data that is target to provide to the picture using device, based on feature information and a determination result of the recognition difficult portion of the determination target picture data, the feature information being information regarding a feature included in determination corresponding map data and including position information of each feature, the determination corresponding map data being map data of a ground surface area corresponding to the determination target picture data; and providing the provision target picture data to the picture using device.

Naturally, the picture data provision program and the picture data provision method can produce the aforementioned effects according to the picture data provision system. Further, it is possible to incorporate some of the aforementioned additional technologies exemplified as the preferred structures of the picture data provision system into the picture data provision program and the picture data provision method.

### BRIEF DESCRIPTION OF THE DRAWINGS

FIG. 1 is a block diagram showing a schematic structure of a picture data provision system according to an embodiment of the present invention.

FIG. 2 is a flowchart showing a schematic provision determining process according to the embodiment of the present invention.

FIG. 3 is a block diagram showing a structure of the picture data provision system according to the embodiment of the present invention.

FIG. 4 is a flowchart showing the provision determining process according to the embodiment of the present invention.

FIG. 5 illustrates map data according to the embodiment of the present invention.

FIG. 6 illustrates map data according to the embodiment of the present invention.

FIG. 7 illustrates map data according to the embodiment of the present invention.

FIG. 8 illustrates a recognition difficult portion determining process according to the embodiment of the present invention.

FIG. 9 illustrates the recognition difficult portion determining process according to the embodiment of the present invention.

FIG. 10 illustrates a portion importance level determining process according to the embodiment of the present invention.

FIG. 11 illustrates a picture data rating process according to the embodiment of the present invention.

FIG. 12 is a flowchart showing a schematic process of the picture data provision system according to the embodiment of the present invention.

FIG. 13 is a flowchart showing a process of the picture data provision system according to the embodiment of the present invention.

FIG. 14 is a flowchart showing a determination target data setting process when obtaining new picture data in the picture data provision system according to the embodiment of the present invention.

FIG. 15 is a flowchart showing the determination target data setting process when obtaining new map data in the picture data provision system according to the embodiment of the present invention.

FIG. 16 is a block diagram showing a structure of a picture using device according to the embodiment of the present invention.

FIG. 17 is a flowchart showing a process of the picture using device according to the embodiment of the present invention.

### DETAILED DESCRIPTION OF THE PREFERRED EMBODIMENT

### 1. Picture data provision system 1

An embodiment of a picture data provision system 1 according to the present invention is explained.
The picture data provision system 1 provides picture data of ground surface photographed from high in the sky to a picture using device 50. The picture data provision system 1 is provided with function parts such as a recognition difficult portion determining unit 30, a provision determining unit 31, a picture data providing unit 32, and the like.
The picture data provision system 1 is provided with an arithmetic processing device such as a CPU as a core member and includes storage devices such as a RAM (Random Access Memory), which is capable of reading out data from the arithmetic processing device and writing the data, a ROM (Read Only Memory), which is capable of reading out the data from the arithmetic processing device, and the like. The respective function parts 30 to 32 of the picture data provision system 1 are structured by either one or both of software (program) stored in a ROM of the picture data provision system 1 or the like and separately installed hardware such as an arithmetic circuit and the like. A picture data provision program that causes the arithmetic process device to realize functions of the respective function parts 30 to 32 is stored in a storing unit such as the RAM, the ROM, and the like, which the arithmetic process device can refer.

The recognition difficult portion determining unit 30 determines, based on determination target picture data that is target to determine whether to provide, a recognition difficult portion that is a portion, where the ground surface is difficult to recognize, in the determination target picture data.
The provision determining unit 31 determines whether the determination target picture data is recognized as provision target picture data that is target to provide to the picture using device 50, based on the feature information that is information regarding a feature included in the determination corresponding map data that is map data of the ground surface area corresponding to the determination target picture data and the determination result of the recognition difficult portion of the determination target picture data. The feature information includes position information or each feature.
The picture data providing unit 32 provides the provision target picture data to the picture using device 50.

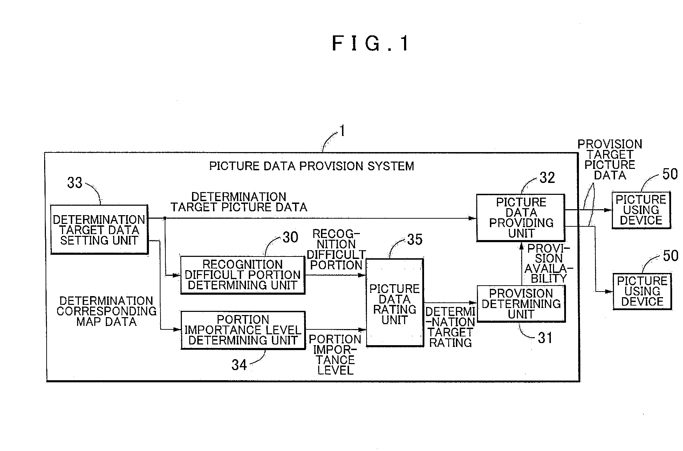

In the present embodiment, the picture data provision system 1, as shown in FIG. 1, is further provided with function parts such as a determination target data setting unit 33, a portion importance level determining unit 34, a picture data rating unit 35, and the like.
The determination target data setting unit 33 is a function part that executes a determination target data setting process to set the determination target picture data that is target to determine whether to provide and the determination corresponding map data that is map data corresponding to the determination target picture data such that the ground surface area of the picture data corresponds to the ground surface area of the map data.
The portion importance level determining unit 34 is a function part that executes a portion importance level determining process to determine an importance level of each portion of the determination target picture data based on the feature information that is information regarding a feature included in the determination corresponding map data and includes position information of each feature.
The picture data rating unit 35 is a function part that executes a rating calculating process to calculate a rating of the determination target picture data such that the rating decreases as the importance level of the recognition difficult portion increases based on the determination result of the recognition difficult portion and the importance level of each portion of the determination target picture data.
The above provision determining unit 31 determines whether the determination target picture data is recognized as the provision target picture data based on the rating of the determination target picture data.

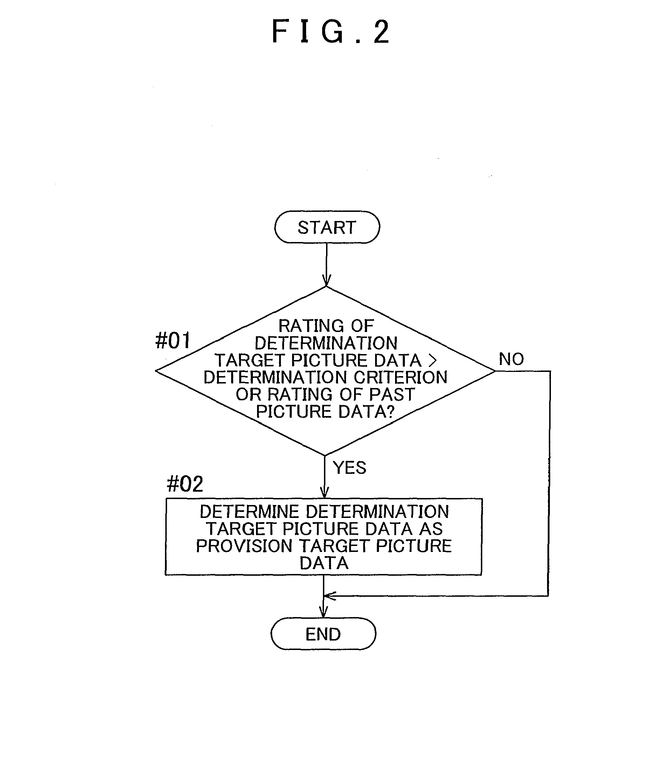

For example, the provision determining unit 31 may determine whether the determination target picture data is recognized as the provision target picture data based on a comparison result between the rating of the determination target picture data and a predetermined determination criterion. Or, the provision determining unit 31 may determine whether the determination target picture data is recognized as the provision target picture data, based on a comparison result between the rating of the determination target picture data and the rating of past picture data that is picture data of the ground surface area corresponding to the determination target picture data provided earlier than the determination target picture data.
In these cases, as shown in a flowchart of FIG. 2, when the rating of the determination target picture data is higher than the previously determined criterion, or when the rating of the determination target picture data is higher than the rating of the past picture data (Step #01: Yes), the provision determining unit 31 determines that the determination target picture data is recognized as the provision target picture data (Step #02). Calculation of the rating of the past picture data is described later.

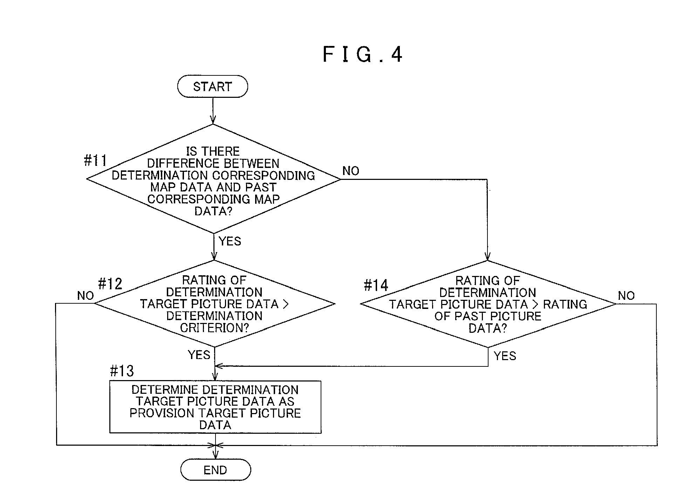

As shown in a flowchart of FIG. 4, the picture data provision system 1 according to the present embodiment, when determining whether to provide the determination target picture data to the picture using device 50 based on the rating of the determination target picture data, changes a determination method of provision availability based on the rating of the determination target picture data according to the determination result of difference between the determination corresponding map data that is map data corresponding to the determination target picture data and past corresponding map data corresponding to the past picture data provided earlier than the determination target picture data.

In the present embodiment, the picture data provision system 1 is provided with a function part of a map data difference determining unit 43. The map data difference determining unit 43 may determine the difference between the determination corresponding map data and the past corresponding map data that is map data of the ground surface area corresponding to the past picture data.
The provision determining unit 31, when it has been determined that there is the difference, determines whether the determination target picture data is recognized as the provision target picture data based on the comparison result between the rating of the determination target picture data and the previously determined criterion. On the other hand, the provision determining unit 31, when it has been determined that there is not the difference, determines whether the determination target picture data is recognized as the provision target picture data based on the comparison result between the rating of the determination target picture data and the rating of the past picture data.

In this case, the provision determining unit 31, as shown in a flowchart of FIG. 4, when it has been determined that there is the difference between the determination corresponding map data and the past corresponding map data (Step #11: Yes), determines whether the rating of the determination target picture data is higher than the previously determined criterion (Step #12). The provision determining unit 31, when it has been determined that the rating of the determination target picture data is higher than the rating of the previously determined criterion (Step #12: Yes), determines that the determination target picture data is recognized as the provision target picture data (Step #13). On the other hand, the provision determining unit 31, when it has been determined that the rating of the determination target picture data is lower than the rating of the previously determined criterion (Step# 12: No), determines that the determination target picture data is not recognized as the provision target picture data.
On the other hand, the provision determining unit 31, when it has been determined that there is not the difference between the determination corresponding map data and the past corresponding map data (Step #11: No), determines whether the rating of the determination target picture data is higher than the rating of the past picture data (Step #14). The provision determining unit 31, when it has been determined that the rating of the determination target picture data is higher than the rating of the past picture data (Step #14: Yes), determines that the determination target picture data is recognized as the provision target picture data (Step #13). On other hand, the provision determining unit 31, when it has been determined that the rating of the determination target picture data is lower than the rating of the past picture data (Step #14: No), determines that the determination target picture data is not recognized as the provision target picture data.
Hereinafter, the structure of the picture data provision system 1 according to the present embodiment is described in detail.

### 1-1. Determination target data setting unit 33

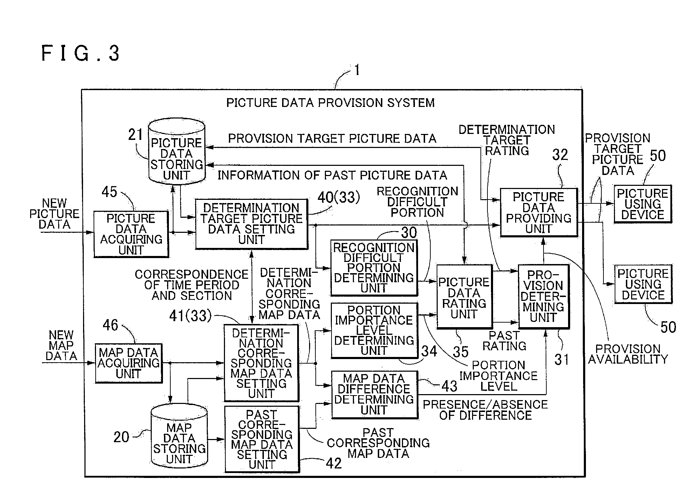

In the present embodiment, the determination target data setting unit 33 sets the determination target picture data and the determination corresponding map data such that the section of the picture data corresponds to the section of the map data and the photographed time of the picture data corresponds to the created time of the map data. In the present embodiment, the ground surface area corresponding to the picture data and the ground surface area corresponding to the map data are treated by a unit of section.
In the present embodiment, the determination target data setting unit 33 sets the determination target picture data and the determination corresponding map data such that the scale of the picture data corresponds to the scale of the map data.
In addition, in the present embodiment, as shown in FIG. 3, the determination target data setting unit 33 is provided with a determination target picture data setting unit 40 that sets the determination target picture data and a determination corresponding map data setting unit 41 that sets the determination corresponding map data.
In addition, the picture data provision system 1 is further provided with: a map data storing unit 20 that stores, for each section, the map data associated with information of the created time; and a picture data storing unit 21 that stores, for each section corresponding to the section of the map data, the picture data associated with information of the photographed time.
In addition, in the present embodiment, the determination target data setting unit 33 differentiates a setting method of the determination target picture data and a setting method of the determination corresponding map data between when new picture data has been acquired and when new map data has been acquired, as described below.

### <Picture data acquisition following process when new picture data has been acquired>

When the picture data provision system 1 has acquired new picture data, the determination target picture data setting unit 40 executes a picture data acquisition following process. That is, when new picture data has been acquired, the determination target picture data setting unit 40 sets the new picture data as the determination target picture data. Thereafter, the determination corresponding map data setting unit 41 acquires, as the determination corresponding map data, the map data of the section which corresponds to the section of the determination target picture data and is associated with the information of the created time corresponding to the photographed time of the determination target picture data, from the map data storing unit 20.

### <Map data acquisition following process when new map data has been acquired>

When the picture data provision system 1 has acquired new map data, the determination corresponding map data setting unit 41 executes a map data acquisition following process. That is, when new map data has been acquired, the determination corresponding map data setting unit 41 sets the new map data as the determination target map data. Thereafter, the determination target picture data setting unit 40 acquires, as the determination target picture data, the picture data of the section, which corresponds to the section of the determination corresponding map data and is associated with the information of the photographed time corresponding to the created time of the determination corresponding map data, from the picture data storing unit 21.

### 1-1-1. Map data storing unit 20

The map data storing unit 20 stores for each section the map data associated with the information of the created time.
The map data storing unit 20 is provided in a storing device such as a hard disk, a flash memory, or the like, which are included in the picture data provision system 1.
In the present embodiment, the map data storing unit 20 cumulatively stores, for each section, the map data of the past created time as well as the map data of the latest created time. That is, the map data storing unit 20 associates the map data of each section with the information of the created time of the map data and stores for each section the map data of a plurality of created times.
In addition, in the present embodiment, the map data storing unit 20 stores a plurality of pieces of map data of different scales for the same ground surface area and stores the map data of a plurality of created times for each section for each scale.

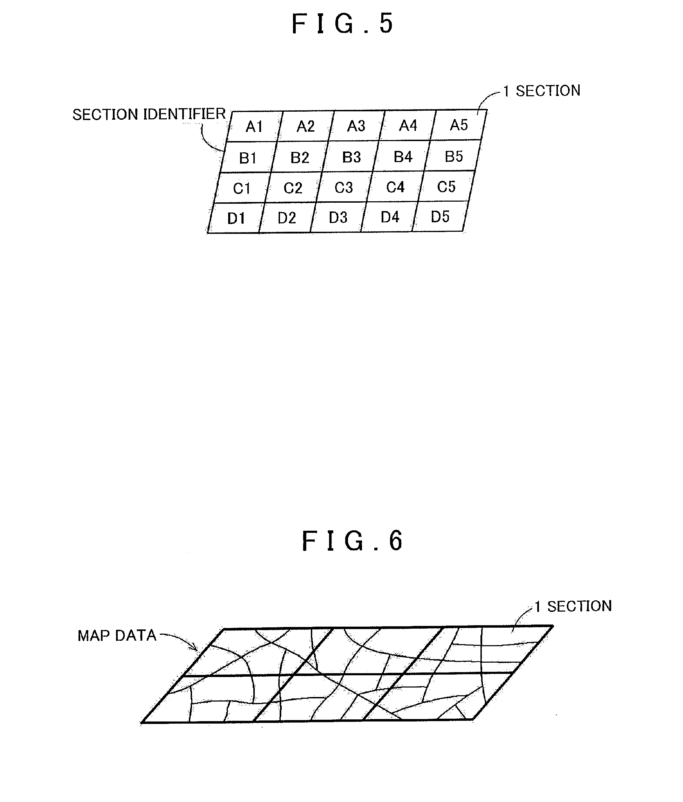

The map data stored in the map data storing unit 20 includes data of each section, which is set by dividing by m x n (m and n are natural numbers) a target ground surface area of the map data. The target ground surface area is defined such that the ground surface area (for example, whole Japan) to provide the picture data is covered. In the present embodiment, as shown in FIG. 5, the section is set such that each section is a rectangle of the same size. However, the section may be set such that the respective sections have different shapes (for example, T-shaped or L-shaped) other than rectangle and of different sizes. In addition, as shown in FIG. 5, an identifier (hereinafter, referred to as a section identifier) to identify a section is assigned to each section.
The map data includes, for each section, information (feature information) regarding various kinds of features existing in the ground surface area corresponding to the map data. In addition, the information of each feature includes position information of the feature. The information of various kinds of features includes: for example, information (road related information) of road such as roads, intersections, bridges, tunnels, painted signs, traffic lights, and the like; information (facility related information) of facility such as buildings, parking lots, parks, and the like; and information (geography related information) of geographic feature such as rivers, coastal lines, reclaimed ground, and the like. FIG. 6 does not show features other than roads and intersections.
The map data of each section is formed of a set of information (data) of various kinds of features such as road information, facility information, geographic feature information, which are respectively associated with a section identifier.

In the present embodiment, the map data recording unit 20 stores a plurality of pieces of map data of different scales for the same target ground surface area. That is, the map data recording unit 20 includes map data of a plurality of scales. The map data by scale is structured such that the information (data) of features of smaller sizes is included as the scale increases. In addition, the map data by scale is structured such that the ground surface area (a dimension) corresponding to one section decreases as the scale increases.

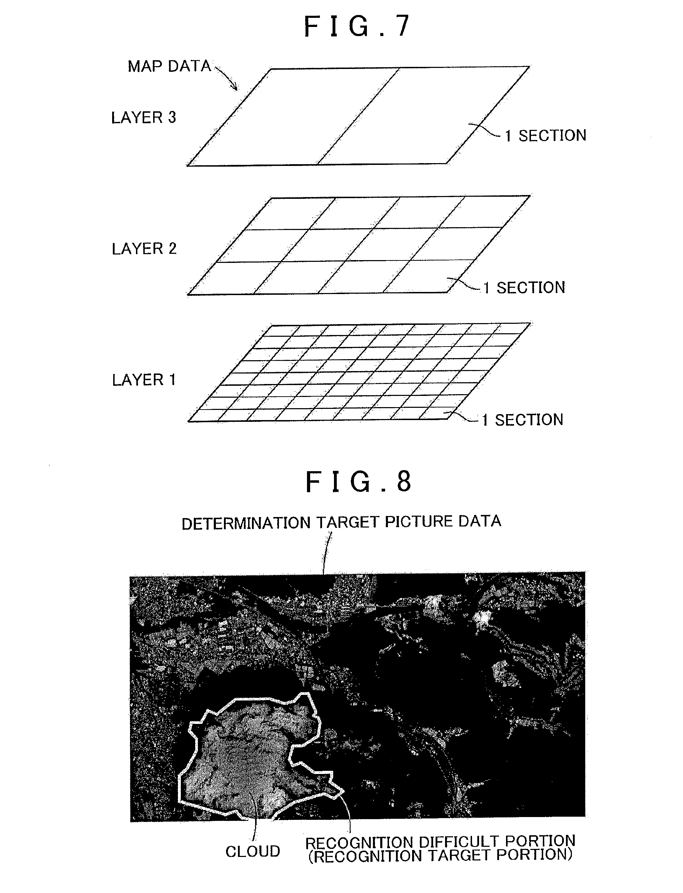

In the present embodiment, as shown in the example of FIG. 7, the map data is provided with a plurality of layers (levels) of different scales for the same target ground surface area. In the example of FIG. 7, the map data includes three layers of, in order of the largest scale first, a detailed scale layer (layer 1), an intermediate scale layer (layer 2), and a broad area scale layer (layer 3). The layer of a larger scale (the detailed scale layer) includes information of features of smaller sizes. That is, the layer of a smaller scale (the broad area scale layer) includes information of features of larger sizes. As the layer is of a larger scale, information of features of larger sizes and smaller sizes is included. In other words, as the layer is of a larger scale, the feature information included in the map data is more detailed.
The map data of each layer is divided into a plurality of sections. As the layer is of a larger scale, the ground surface area (the dimension) corresponding to one section decreases. That is, the ground surface area (the dimension) corresponding to one section of a layer of a large scale is smaller than the ground surface area (the dimension) corresponding to one section of a layer of a small scale.
Thus, as the layer is of a larger scale, the information of features of smaller sizes is included and the ground surface area (the dimension) corresponding to the one section decreases.

In case of information of roads, as the scale is larger, roads of smaller sizes are included. For example, the size of a road is defined based on a level of the road, the width of the road, and the number of lanes of the road, and the like. As the scale is larger, roads of lower levels, roads with narrower widths, roads with smaller number of lanes are included. Hereinafter, examples of the levels of road are shown.
Broad area scale layer (small scale): Highway, National road
Intermediate scale layer (intermediate scale): Highway, National road, General road
Detailed scale layer (large scale): Highway, National road, General road, Narrow street
The road includes, in order of the highest level (largest size) first, a highway, a national road, a general road, and a narrow street.
In case of information of facilities, as the scale is larger, facilities of smaller sizes are included, as shown in the following example. For example, the size of a facility is defined based on a dimension of a facility and the like. As the scale is larger, facilities of smaller dimensions are included.
Broad area scale layer (small scale): Large size commercial facility
Intermediate scale layer (intermediate scale): Large size commercial facility, Intermediate size commercial facility
Detailed scale layer (large scale): Large size commercial facility, Intermediate size commercial facility, Small size commercial facility
The commercial facility includes, in order of largest size facility first, a large size commercial facility, an intermediate size commercial facility, a small size commercial facility.

In case of the information of geographic features, as the scale is larger, geographic features of smaller sizes are included, as shown in the following example. For example, the size of a geographic feature is defined based on a dimension of the geographic feature area, a length of the geographic feature, a level of the geographic feature, and the like. As the scale is larger, geographic features with areas of smaller dimensions, geographic features with shorter lengths, geographic features of lower levels, and the like are included.
Broad area scale layer (small scale): Large size reclaimed ground
Intermediate scale layer (intermediate scale): Large size reclaimed ground, Intermediate size reclaimed ground
Detailed scale layer (large scale): Large size reclaimed ground, Intermediate size reclaimed ground, Small size reclaimed ground
Or,
Broad area scale layer (small scale): Coastal line of a long length
Intermediate scale layer (intermediate scale): Coastal line of a long length, Coastal line of an intermediate length
Detailed scale layer (large scale): Coastal line of a long length, Coastal line of an intermediate length, Coastal line of a short length
Or,
Broad area scale layer (small scale): First graded river
Intermediate scale layer (intermediate scale): First graded river, Second graded river
Detailed scale layer (large scale): First graded river, Second graded river, River other than first graded river and second graded river
The reclaimed ground includes, in order of largest dimension (largest size) first, large size reclaimed ground, intermediate size reclaimed ground, and small size reclaimed ground. The river includes, in order of highest level (largest size) first, a first graded river, a second graded river, and a river other than a first graded river and a second graded river.

The information of features included in the map data includes attribute information of each feature. When the feature is a road, the attribute information indicating the attribute of the road includes, for example, a road type such as a level or kind of the road, a road width, the number of lanes of the road, and the like. When the feature is a facility, the attribute information indicating the attribute of the facility includes, for example, a facility attribute such as a level or a kind of the facility, a facility dimension, and the like. When the feature is a geographic feature, the attribute information indicating the attribute of the geographic feature includes, for example, a geographic feature type such as a level or a kind of the geographic feature, a dimension of the geographic feature area, a length of the geographic feature, and the like.
The road type included in the attribute of the road includes, for example, a highway, a national road, a general road, a narrow street, an intersection of highway, an intersection of national road, an intersection of general road, an intersection of narrow street, and the like.
The facility type included in the attribute of the facility includes, for example, a large size commercial facility, an intermediate size commercial facility, a small size commercial facility, a large size apartment, an intermediate size apartment, an individual residence, and the like. The facility dimension included in the attribute of the facility includes, for example, a dimension of a parking lot, a dimension of a commercial facility, a dimension of a residence, and the like.
The geographic feature type included in the attribute of the geographic feature includes, for example, a first graded river, a second graded river, a river other then a first graded river and a second graded river, and the like. The dimension of the geographic feature area included in the attribute of the feature includes, for example, a dimension of a reclaimed ground, and the like. The length of the geographic feature included in the attribute of the geographic feature includes, for example, a length of a coastal line, and the like.

### 1-1-2. Map data acquiring unit 46

The picture data provision system 1 according to the present embodiment is provided with a map data acquiring unit 46, as shown in FIG. 3. The map data acquiring unit 46 is a function part that executes a map data acquiring process to acquire new map data from outside of the picture data provision system 1.
The map data acquiring unit 46 acquires the new map data from a new map data provision system that provides a provision service of map data.
The new map data provision system provides the new map data together with the information such as the created time and the scale of the new map data to the picture data provision system 1. The provision of the map data from the new map data provision system to the picture data provision system 1 is made through a communication network or a recording medium.
The map data acquiring unit 46 stores the new map data in association with the information of the created time of the new map data in the map data recording unit 20.
The picture data provision system 1 may not be provided with the map data acquiring unit 46 in a case in which the picture data provision system 1 executes only the picture data acquisition following process when the new picture data has been acquired and does not execute the map data acquisition following process when the new map data has been acquired.

### 1-1-3. Picture data storing unit 21

The picture data storing unit 21 stores the picture data in association with the information of the photographed time for each section corresponding to the section of the map data.
The picture data storing unit 21 is provided in a storing unit such as a hard disk, a flash memory, and the like that are included in the picture data provision system 1.

In the present embodiment, the picture data storing unit 21 stores the picture data for each section in association with provision target identification information that is information to identify whether it has been determined that the picture data is recognized as the provision target picture data.
In addition, the picture data storing unit 21 stores the information of the photographed time of the picture data (hereinafter, simply referred to as provision target picture data), which it has been determined that is recognized as the provision target picture data, so as to include version information that has been upgraded for each section according to the photographed time of the provision target picture data.
When it has been newly determined that the determination target picture data is recognized as the provision target picture data, the version of the section corresponding to the provision target picture data is upgraded. Then, the version information of the upgraded version is stored together with the information of the photographed time of the new provision target picture data in the picture data storing unit 21.

The picture data storing unit 21 stores the picture data for each section in association with the information of the rating of the picture data calculated by the picture data rating unit 35 described later. That is, the picture data is set as the determination target picture data; associated with the information of the rating calculated by the recognition difficult portion determining unit 30, the portion importance level determining unit 34, and the picture data rating unit 35; and stored in the picture data storing unit 21.

In the present embodiment, the picture data storing unit 21 cumulatively stores not only the provision target picture data with the latest photographed time for each section but also the provision target picture data with past photographed time and the determination target picture data which it has not been determined that is recognized as the provision target picture data. That is, the picture data storing unit 21 stores all of the acquired new picture data.
In addition, the picture data storing unit 21 may store only the provision target picture data in a case in which the picture data provision system 1 executes only the picture data acquisition following process when the new picture data has been acquired and does not execute the map data acquisition following process when the new map data has been acquired. In such case, the picture data storing unit 21 may store only the provision target picture data with the latest photographed time for each section. Or, the picture data storing unit 21 may cumulatively store not only the provision target picture data with the latest photographed time for each section, but also the provision target picture data with the past photographed time. In such case, the picture data storing unit 21 may not store the provision target identification information.

In addition, the picture data storing unit 21 stores a plurality of pieces of picture data of different scales and resolutions for the same ground surface area. The picture data storing unit 21 stores the picture data for each scale and each resolution for each section in association with the information of the photographed time of the picture data.

### 1-1-4. Picture data acquiring unit 45

The picture data provision system 1 according to the present embodiment is provided with a picture data acquiring unit 45 that is a function part that executes a picture data acquiring process to acquire the picture data from outside of the picture data provision system 1.
The picture data includes, for example, pictures of ground surface acquired by photographing the ground surface from high in the sky through an airplane, an artificial satellite, and the like, that is, aerial photos, satellite photos, and the like. The picture data acquiring unit 45 acquires picture data from a new picture data provision system that provides a provision service of the picture data.
The new picture data provision system provides, to the picture data provision system 1, new picture data together with the information of the photographed time of the new picture data, the position information of the photographed ground surface, the scale of the new picture data, the resolution, and the like. The provision of the picture data from the new picture data provision system to the picture data provision system 1 is made through a communication network or a recording medium.

### 1-1-4-1. Picture data dividing unit

The picture data acquiring unit 45 is provided with a picture data dividing unit. The picture data dividing unit is a function part that executes a picture data dividing process to divide new picture data into sections corresponding to the sections of the map data when the new picture data not divided into the sections corresponding to the sections of the map data has been acquired.
In the present embodiment, the picture data dividing unit divides the new picture data into the sections corresponding to the sections of the map data based on the position information of the new picture data and the position information of border lines of the sections of the map data, and creates the new picture data for each section.

In the present embodiment, when the acquired new picture data includes the information of the scale, the picture data dividing unit selects the map data of the scale corresponding (for example, closest to) the scale of the new picture data and divides the new picture data into the sections of the selected map data.
When the acquired new picture data does not include the information of the scale, the picture data dividing unit determines the scale of the new picture data based on the information of the resolution of the new picture data. For example, the picture data dividing unit determines the scale of the new picture data based on the number of pixels per unit ground surface dimension. As the number of pixels per unit ground surface dimension increases, the features of smaller sizes can be identified. Therefore, a larger scale is determined. In such case, the picture data dividing unit determines the scale according to a plurality of scales of the map data stored in the map data recording unit 20. For example, the picture data dividing unit selects the closest scale among the plurality of scales of the map data.

In addition, when it is not possible to acquire the new picture data corresponding to all scales of the map data, the picture data dividing unit may create the picture data of a scale that has not been acquired using the picture data of a scale that was acquired. In order to create the picture data of a smaller scale from the picture data of a larger scale, a conversion to decrease the resolution of the picture data (to decrease the number of pixels) may be executed.

In addition, the sections of the picture data may not totally match the sections of the map data. For example, a section created by collecting a plurality of adjacent sections may be set as a section of the picture data. Or, one of a plurality of sections created by dividing a piece of map data may be set as a section of the picture data. Or, the sections of the picture data may not match the sections of the map data at all.

When the position information of the new picture data is poor in its accuracy, or when the new picture data does not include the position information, the position of the new picture data may be determined through pattern matching between the new picture data and the map data, and the new picture data may be divided into the sections corresponding to the map data.
Or, when the new picture data is previously divided into sections, the picture data dividing process by the picture data dividing unit may not be executed. Or, the picture data dividing unit may not be provided in the picture data acquiring unit 45.

### 1-1-5. Picture data acquisition following process (when new picture data has been acquired)

The picture data acquisition following process to be executed when new picture data has been acquired is described in detail.

### <Determination target picture data setting unit 40>

When the new picture data has been acquired, as mentioned above, the determination target picture data setting unit 40 sets the new picture data as the determination target picture data.
In the present embodiment, the determination target picture data setting unit 40 sets, as the determination target picture data, the new picture data of each section after the picture data dividing unit divided the new picture data into sections.

### <Determination corresponding map data setting unit 41 >

The determination corresponding map data setting unit 41 acquires from the map data recording unit 20, as the determination corresponding map data, the map data of the section, which corresponds to the section of the determination target picture data and is associated with the information of the created time corresponding to the photographed time of the determination target picture data.
In the present embodiment, the determination corresponding map data setting unit 41 acquires from the map data recording unit 20, as the determination corresponding map data, the map data associated with the information of the created time closest to the photographed time of the determination target picture data. In addition, the determination corresponding map data setting unit 41 may acquire, as the determination corresponding map data, the map data that is associated with the information of the latest created time before the photographed time of the determination target picture data, or the map data that is associated with the information of the oldest created time after the photographed time of the determination target picture data. Or, when the usage time of the map data included in the picture data provision system 1 or the picture using device 50 is set using the created time of the map data as a reference, the determination corresponding map data setting unit 41 may acquire, as the determination corresponding map data, the map data associated with the information of the created time, with which the usage time of the map data includes the photographed time of the determination target picture data.

In addition, in the present embodiment, the determination corresponding map data setting unit 41 acquires from the map data storing unit 20, as the determination corresponding map data, the map data of a scale corresponding to (for example, closest to) the scale of the determination target picture data.
When the new picture data is for a plurality of sections, and thereby the determination target picture data is for a plurality of sections, the determination corresponding map data is acquired for each section.

### 1-1-6. Map data acquisition following process (when new map data has been acquired)

Next, the map data acquisition following process to be executed when new map data has been acquired is described.

### <Determination corresponding map data setting unit 41 >

The determination corresponding map data setting unit 41 sets the new map data as the determination corresponding map data when the new map data has been acquired, as described above.
In the present embodiment, when the new map data is for a plurality of sections, the determination corresponding map data setting unit 41 sets the new map data of each section as the determination corresponding map data.

### <Determination target picture data setting unit 40>

The determination target picture data setting unit 40 acquires from the picture data storing unit 21 the picture data of the section that corresponds to the section of the determination corresponding map data and is associated with the information of the photographed time corresponding to the created time of the determination corresponding map data
In the present embodiment, the determination target picture data setting unit 40 acquires, as the determination target picture data, the picture data associated with the information of the photographed time closest to the created time of the determination corresponding map data. In addition, the determination target picture data setting unit 40 may acquire, as the determination target picture data, the picture data that is associated with the information of the latest photographed time before the created time of the determination corresponding map data, or the picture data that is associated with the information of the oldest photographed time after the created time of the determination corresponding map data. Or, when the usage time of the picture data included in the picture data provision system 1 or the picture using device 50 is set using the photographed time of the picture data as a reference, the determination target picture data setting unit 40 acquires, as the determination target picture data, the picture data associated with the information of the photographed time, with which the usage time of the picture data includes the created time of the determination corresponding map data.

In addition, in the present embodiment, the determination target picture data setting unit 40 acquires from the picture data storing unit 21, as the determination target picture data, the map data of a scale corresponding to (for example, closest to) the scale of the determination corresponding map data.
When the new map data is for a plurality of sections, and thereby the determination corresponding map data is for a plurality of sections, the determination target picture data is acquired for each section.

### 1-2. Recognition difficult portion determining unit 30

The recognition difficult portion determining unit 30 is a function part that executes a recognition difficult portion determining process to determine, based on the determination target picture data that is target to determine whether to provide, a recognition difficult portion that is a portion of the determination target picture data where the ground surface is difficult to recognize.
In the present embodiment, the recognition difficult portion determining unit 30 determines the recognition difficult portion where the ground surface is difficult to recognize due to a covering object. In the present embodiment, the covering object is a floating object in the air such as clouds, fog, dusts, and the like. The covering object may be snow, rainwater, and the like.
Or, the recognition difficult portion determining unit 30 may determine the recognition difficult portion where the ground surface is difficult to recognize due to lack of sunlight caused by the shadow of clouds, the position of the sun, or the like.

The recognition difficult portion determining unit 30 determines the recognition difficult portion by executing an image process with respect to the determination target picture data. For example, the recognition difficult portion determining unit 30 may extract points in colors similar to the color (a recognition target color) of the recognition target object such as clouds from the determination target picture data, determine a portion (an area) where the points having the recognition target color gather by a predetermined amount or more as the recognition target portion, and execute the image process to determine the recognition difficult portion based on the recognition target portion. The recognition difficult portion determining unit 30, when the cloud is the recognition target object, as shown in FIG. 8, determines a portion (an area) where the points in colors similar to white gather by a predetermined amount or more as the recognition target portion (a cloud portion) and determines the recognition difficult portion based on the recognition target portion (the cloud portion).

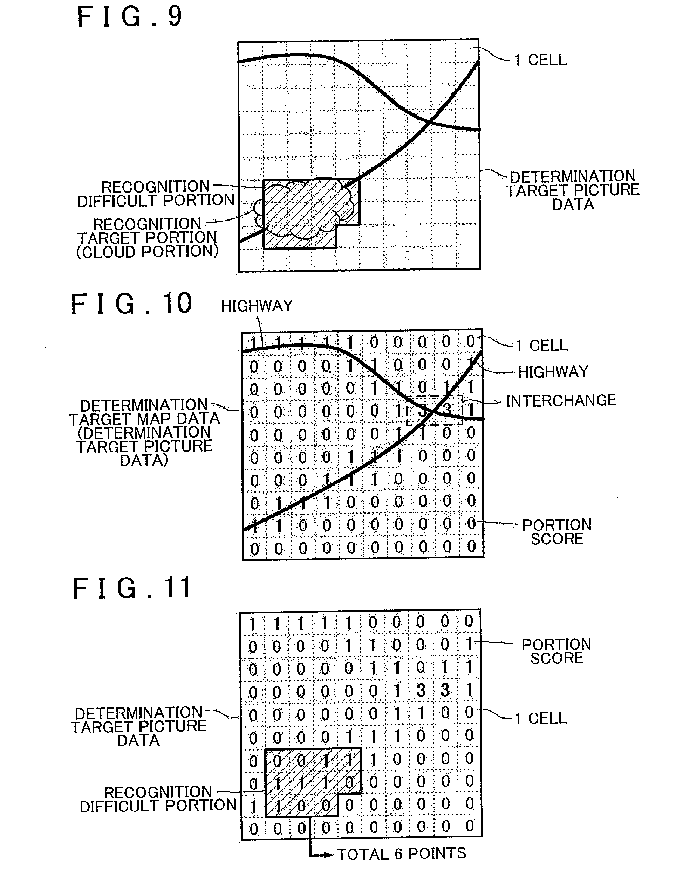

In the present embodiment, the recognition difficult portion determining unit 30 sets an area (hereinafter referred to as cell) that is set by dividing the determination target picture data in a reticular pattern, as shown in an example of FIG. 9, and determines the recognition difficult portion by each cell. That is, the recognition difficult portion determining unit 30 determines, as the recognition difficult portion, the cell where it has been determined that the ground surface is difficult to recognize.
In the example shown in FIG. 9, each cell is formed by dividing the determination target picture data for one section by m x n (10 x 10 in the example shown in FIG. 9). In the present embodiment, the cells are set so as to be rectangles of the same size. However, the cells may be in shapes (for example, T-shape, L-shape) other than rectangle and of different sizes. In addition, an identifier (also referred to as cell identifier) to identify each cell is assigned to each cell.

In the present embodiment, the recognition difficult portion determining unit 30 determines a cell, in which the rate of the recognition target portion (for example, cloud portion) is equal to or larger than a predetermined rate (for example, 30%), as the recognition difficult portion.
The recognition difficult portion determining unit 30 outputs an identifier of the cell determined as the recognition difficult portion to the picture data rating unit 35.
When the determination target picture data is for a plurality of sections, the recognition difficult portion is determined for the determination target picture data of each section.

### 1-3. Portion importance level determining unit 34

The portion importance level determining unit 34 is a function part that executes the portion importance level determining process to determine an importance level of each portion of the determination target picture data, based on the feature information that is the information regarding a feature included in the determination target picture data and includes position information of each feature.
In the present embodiment, the portion importance level determining unit 34, using as a portion an area (a cell) set by dividing the determination target picture data in a reticular pattern, determines the importance level for each portion. That is, the portion importance level determining unit 34 determines the importance level of each cell based on the feature information included in the cell of the determination corresponding map data corresponding to the cell of the determination target picture data subject to determine the recognition difficult portion. In addition, the portion importance level determining unit 34 may execute the portion importance level determining process only for the cells of the determination corresponding map data corresponding to the cells determined as the recognition difficult portions to determine the importance level and may not execute the portion importance level determining process for the cells of the determination corresponding map data corresponding to the cells not determined as the recognition difficult portions not to determine the importance level.

As described above, the feature information included in the map data includes attribute information of each feature. In addition, the feature includes at least one of the road, the facility, and the geographic feature. The feature information includes at least one of: at least one of a road type, a number of lanes, and a road width as the attribute information indicating the attribute of the road; at least one of a facility type and a facility dimension as the attribute information indicating the attribute of the facility; and at least one of a geographic feature type, an area dimension of the geographic feature, and a length of the geographic feature as the attribute information indicating the attribute of the geographic feature.
In the present embodiment, the portion importance level determining unit 34 sets the importance level of each cell of the determination target picture data according to the attribute of a feature included in each cell of the determination corresponding map data.
The portion importance level determining unit 34 determines the importance level based on at least one of the road type, the number of lanes, and the road width of a road included in each cell of the determination corresponding map data and/or at least one of the facility type and the facility dimension of a facility included in each cell of the determination corresponding map data.

The portion importance level determining unit 34 sets the importance level based on the attribute of the feature such that the importance level increases as the size of the feature increases.
For example, regarding roads, the importance level is determined based on at least one of the road type, the number of lanes, and the road width such that the importance level increases as the size of the road increases. Regarding facilities, the importance level is determined based on at least one of the facility type and the facility dimension such that the importance level increases as the size of the facility increases.

In addition, in the present embodiment, the portion importance level determining unit 34 changes, according to the scale of the determination target picture data, the importance level to be set based on the attribute of each feature.
Specifically, as the scale of the determination target picture data increases, the portion importance level determining unit 34 increases the importance level with respect to the feature having the same attribute such that the size of the feature to which the same importance level is determined decreases.
For example, regarding roads, as the scale of the determination target picture data increases, the importance level with respect to the road having the same attribute, the importance level with respect to the road having the same number of lanes, and the importance level with respect to the road having the same road width are increased such that the size of the feature to which the same importance level is determined decreases.
In addition, regarding facilities, as the scale of the determination target picture data increases, the importance level with respect to the facility having the same facility type and the importance level with respect to the facility having the same facility dimension are increased such that the size of the feature to which the same importance level is determined decreases.

In addition, when a plurality of pieces of feature information is included in one cell and a plurality of importance levels can be determined, the portion importance level determining unit 34 determines the highest importance level as the importance level (a portion score) of the cell. That is, the portion importance level determining unit 34 determines the importance level of each cell based on the feature information of the feature with which the importance level becomes the highest.

In addition, the portion importance level determining unit 34 determines the portion score as the importance level of each cell based on the feature information of a feature included in the determination corresponding map data. In the present embodiment, as the importance level increases, the portion score is set larger.

### [In case of road type]

Next, examples are shown, in which the portion importance level determining unit 34 determines the importance level (the portion score) based on the road type as the attribute information of road.

An example is shown, in which the scale of the determination target picture data is small.

### <Small scale, road type>

### High importance level (portion score 3): Intersection on highway (Interchange or junction)

### Intermediate importance level (portion score 2): Intersection on national road Low importance level (portion score 1): Highway, National road

### Zero importance level (portion score 0): General road, Narrow street

As shown in the example, when a road having the attribute information "Intersection on highway" as the road type is included in a cell, the cell is determined as the high importance level and the portion score is determined as 3. In addition, when a road having the attribute information "National road" as the road type is included in a cell, the cell is determined as the low importance level and the portion score is determined as 1. When a road having the attribute information "Narrow street" is included as the road type in a cell, the cell is determined as the zero importance level and the portion score is determined as 0.
As shown in the example, the importance level of "Intersection on highway" that is large in size is set higher than the importance level of "Intersection on national road" that is small in size. In addition, the importance level of "Highway, National road" that is large in size is set higher than the importance level of "General road, Narrow street" that is small in size.

An example is shown, in which the scale of the determination target picture data is large.

### <Large scale, road type>

### High importance level (portion score 3): Intersection on highway, Intersection on national road

### Intermediate importance level (portion score 2): Highway, National road, Intersection on national road, Intersection on narrow street

Low importance level (portion score 1): General road, Narrow street Zero importance level (portion score 0):
As shown in these examples, as the scale of the determination target picture data increases, the road type assigned to the low importance level is changed from "Highway, National road" to "General road Narrow Street," that is, the size of road decreases. In addition, as the scale of the determination target picture data increases, the importance level assigned to "Highway, National road" is changed from the low importance level to the intermediate importance level, that is, the importance level increases.

### [In case of number of lanes]

Next, examples are shown, in which the portion importance level determining unit 34 determines the importance level (the portion score) based on the number of lanes as the attribute information of road.
An example is shown, in which the scale of the determination target picture data is small.

### <Small scale, number of lanes>

High importance level (portion score 3):
Intermediate importance level (portion score 2): Road with 6 lanes
Low importance level (portion score 1): Road with 4 lanes
Zero importance level (portion score 0): Road with 2 lanes, Road with 1 lane

As shown in the example, when a road having the attribute information "4 lanes" as the number of lanes is included in a cell, the cell is determined as the low importance level and the portion score is determined as 1. In addition, when a road having the attribute information "1 lane" as the number of lanes is included in a cell, the cell is determined as the zero importance level and the portion score is determined as 0.
As shown in the example, the importance level of "Road with 6 lanes" that is large in size is set higher than the importance level of "Road with 4 lanes" that is small in size.

An example is shown, in which the scale of the determination target picture data is large.

### <Large scale, number of lanes>

### High importance level (portion score 3): Road with 6 lanes

### Intermediate importance level (portion score 2): Road with 4 lanes

Low importance level (portion score 1): Road with 2 lanes, Road with 1 lane Zero importance level (portion score 0):
As shown in these examples, as the scale of the determination target picture data increases, the number of lanes assigned to the low importance level is changed from "Road with 4 lanes" to "Road with 2 lanes, Road with 1 lane," that is, the size of road decreases. In addition, as the scale of the determination target picture data increases, the importance level assigned to "Road with 4 lanes" is changed from the low importance level to the intermediate importance level, that is, the importance level increases.

### [In case of facility type]

Next, an example is shown in which the scale of the determination target picture data is small and the portion importance level determining unit 34 determines the importance level (the portion score) based on the facility type as the attribute information of facility.
Here, an example is shown in which commercial facilities are classified by size. However, as the facility type, various kinds of facilities such as residences, factories, public facilities may be classified by size, kinds, or the like.

### <Small scale, facility type>

High importance level (portion score 3):
Intermediate importance level (portion score 2):
Low importance level (portion score 1): Large-size commercial facility
Zero importance level (portion score 0): Medium-size commercial facility, Small-size commercial facility
As shown in the example, when a facility having the attribute information "Large-size commercial facility" as the facility type is included in a cell, the cell is determined as the low importance level and the portion score is determined as 1. In addition, when a facility having the attribute information "Small-size commercial facility" as the facility type is included in a cell, the cell is determined as the zero importance level and the portion score is determined as 0.
As shown in the example, the importance level of "Large-size commercial facility" that is large in size is set higher than the importance level of "Medium-size commercial facility, Small-size commercial facility" that is small in size.

An example is shown, in which the scale of the determination target picture data is large.

### <Large scale, facility type >

High importance level (portion score 3): Large-size commercial facility
Intermediate importance level (portion score 2): Medium-size commercial facility
Low importance level (portion score 1): Small-size commercial facility
Zero importance level (portion score 0):
As shown in these examples, as the scale of the determination target picture data increases, the facility type assigned to the low importance level is changed from "Large-size commercial facility" to "Small-size commercial facility," that is, the size of facility decreases. In addition, as the scale of the determination target picture data increases, the importance level assigned to "Large-size commercial facility" is changed from the low importance level to the high importance level, that is, the importance level increases.

### [In case of facility dimension]

Next, an example is shown, in which the scale of the determination target picture data is small and the portion importance level determining unit 34 determines the importance level (the portion score) based on the facility dimension as the attribute information of facility.
Here, an example of the facility dimensions of the commercial facilities is shown. However, the facility dimensions of various kinds of facilities such as residences, factories, public facilities may be included.

### <Small scale, facility dimension>

High importance level (portion score 3):
Intermediate importance level (portion score 2):
Low importance level (portion score 1): Commercial facility with large facility dimension
Zero importance level (portion score 0): Commercial facility with intermediate facility dimension, Commercial facility with small facility dimension
As shown in the example, when a facility having the attribute information "Large facility dimension" as the facility type is included in a cell, the cell is determined as the low importance level and the portion score is determined as 1. In addition, when a facility having the attribute information "Small facility dimension" as the facility type is included in a cell, the cell is determined as the zero importance level and the portion score is determined as 0. The portion importance level determining unit 34 includes relation characteristics between the facility dimension and the importance level (the portion score) and determines the importance level (the portion score) based on the facility dimension using the relation characteristics.

An example is shown, in which the scale of the determination target picture data is large.

### <Large scale, facility dimension>

### High importance level (portion score 3): Commercial facility with large facility dimension

### Intermediate importance level (portion score 2): Commercial facility with intermediate facility dimension

### Low importance level (portion score 1): Commercial facility with small facility dimension

Zero importance level (portion score 0):
As shown in these examples, as the scale of the determination target picture data increases, the facility dimension assigned to the low importance level is changed from "Large facility dimension" to "Small facility dimension," that is, the size of facility decreases. In addition, as the scale of the determination target picture data increases, the importance level assigned to "Large facility dimension" is changed from the low importance level to the high importance level, that is, the importance level increases.

With reference to an example shown in FIG. 10, the process of the portion importance level determining unit 34 is explained.
As shown in FIG. 10, the portion importance level determining unit 34 divides the determination corresponding map data into cells corresponding to the cells of the determination target picture data shown in FIG. 9.
The portion importance level determining unit 34 determines the importance level (the portion score) of each cell based on the feature information included in the cell of the determination corresponding map data. In the present embodiment, as mentioned above, the portion importance level determining unit 34 sets the importance level of each cell of the determination target picture data based on the attribute of a feature included in the cell of the determination corresponding map data. In such case, the portion importance level determining unit 34 extracts a feature having an attribute to which an importance level is set (the portion score is set to a value more than zero) from the feature(s) included in each cell of the determination corresponding map data and determines the importance level of the extracted feature. When the portion importance level determining unit 34 has determined the importance levels for a plurality of features for each cell, the highest importance level in the cell is determined as the importance level (the portion score) of the cell.

In FIG. 10, only Highway and Interchange (Intersection on highway) to which the importance level is set (the portion score is set to a value more than zero) are displayed and features to which the importance level is not set (the portion score is set to zero) are not displayed. FIG. 10 illustrates an example, in which the importance level (the portion score) is determined based on the road type as the attribute information of road. As the aforementioned example when the scale is small, the road type of Highway is set so as to be determined as the low importance level (the portion score 1) and Intersection on highway (Interchange) is set so as to be determined as the high importance level (the portion score 3).
As shown in FIG. 10, for the cells including the feature information with the attribute of Highway, the portion score is determined as 1. For the cells including the feature information with the attributes of Highway and Intersection on highway (Interchange), the portion score 3 for Intersection on highway which is higher between the portion score 1 for Highway and the portion score 3 for Intersection on highway is determined as the final portion score of the cell.
In addition, for the cells not including any features to which the importance level is set (the portion score is set to a value more than zero), the portion score is determined as zero. The portion importance level determining unit 34 outputs the determined portion score of each cell to the picture data rating unit 35. In addition, as mentioned above, only for the cells corresponding to the cells determined as the recognition difficult portion as shown in FIG. 9, the importance level (the portion score) may be determined by executing the portion importance level determining process, and for the cells of the determination target picture data corresponding to the cells not determined as the recognition difficult portion, the importance level may not be determined without executing the portion difficult level determining process.
When the determination target picture data is for a plurality of sections, the portion importance level is determined for the determination target picture data of each section.

### 1-4. Picture data rating unit 35

The picture data rating unit 35 is a function part that executes the rating calculating process to calculate the rating of the determination target picture data such that the rating decreases as the importance level of the recognition difficult portion increases based on the determination result of the recognition difficult portion and the importance level of each portion of the determination target picture data.
In the present embodiment, the picture data rating unit 35 calculates the rating of the determination target picture data based on the cells of the determination target picture data determined as the recognition difficult portion and the importance level (the portion score) of each cell.
In the present embodiment, the picture data rating unit 35 calculates a total score based on the total (referred to as the total portion score) of the portion score corresponding to each of the recognition difficult portion(s) and calculates a rating based on the total score.
In the present embodiment, the picture data rating unit 35 calculates the total score by subtracting the total portion score from a predetermined highest rating and sets the total score as the rating of the determination target picture data.
Thereafter, the picture data rating unit 35 outputs the calculated rating (also referred to as a determination target rating) of the determination target picture data to the picture data providing unit 32.

With reference to FIG. 11, the process of the picture data rating unit 35 is explained.
The picture data rating unit 35 calculates the total score by adding the portion scores of the cells corresponding to the respective cells of the determination target picture data determined as the recognition difficult portions. In the example shown in FIG. 11, the total score is 6. Thereafter, the picture data rating unit 35 subtracts the total score 6 from the highest score set to 100 to calculate the score 94 as the rating. Thereafter, the picture data rating unit 35 outputs the calculated score 94 as the rating of the determination target picture data to the provision determining unit 31.

### <Rating of past picture data>

In addition, the picture data rating unit 35 calculates the rating (also referred to as past rating) of the past picture data such that the rating decreases as the importance level of the recognition difficult portion increases, based on the determination result of the recognition difficult portion and the importance level of each portion for the past picture data being the picture data of the ground surface area (section) corresponding to the determination target picture data provided earlier than the determination target picture data.
In the present embodiment, the picture data rating unit 35 extracts the picture data provided earlier than the determination target picture data for the section corresponding to the determination target picture data from the picture data storing unit 21 based on provision target identification information and the like, and acquires from the picture data storing unit 21, as the information of the past picture data, the information of the picture data associated with the information of the latest photographed time among the extracted picture data.
When the picture data storing unit 21 stores only the latest provision target picture data for each section as mentioned above, the picture data rating unit 35 acquires from the picture data storing unit 21, as the information of the past picture data, the information of the picture data of the section corresponding to the determination target picture data.

In the present embodiment, as mentioned above, the picture data storing unit 21 stores, also regarding the past picture data that has been determined as the determination target picture data in the past, the information of its rating that has been calculated by the picture data rating unit 35. The picture data rating unit 35 acquires the information of the rating stored in association with the picture data corresponding to the past picture data.

Or, the picture data rating unit 35 may execute, with respect to the past picture data, the recognition difficult portion determining process by the recognition difficult portion determining unit 30, the portion importance level determining process by the portion importance level determining unit 34, and a picture data rating process by the picture data rating unit 35 to calculate the rating of the past picture data. That is, the determination target picture data setting unit 40 sets the past picture data as the determination target picture data. The determination corresponding map data setting unit 41 sets the determination corresponding map data corresponding to the past picture data set as the determination target picture data. The recognition difficult portion determining unit 30 determines a recognition difficult portion of the past picture data set as the determination target picture data. In addition, the portion importance level determining unit 34 determines the importance level based on the determination corresponding map data set corresponding to the past picture data. The picture data rating unit 35 calculates the rating of the past picture data based on the recognition difficult portion corresponding to the past picture data and the importance level. When the determination target picture data is for a plurality of sections, the rating of the determination target picture data and the rating of the past picture data are calculated for each section.

### 1-5. Past corresponding map data setting unit 42

A past corresponding map data setting unit 42 is a function part that executes a past corresponding map data setting process to acquire the information of the photographed time of the past picture data which is picture data of the section (hereinafter, referred to as a target section) corresponding to the section of the determination target picture data or the determination corresponding map data provided earlier than the determination target picture data and set past corresponding map data which is the map data of the section corresponding to the determination corresponding map data, the map data being associated with the information of the created time corresponding to the photographed time of the past picture data

### <Acquisition of information of photographed time of past picture data>

In the present embodiment, the past corresponding map data setting unit 42 extracts the past picture data provided earlier than the determination target picture data for the target section based on the provision target identification information from the picture data storing unit 21 and acquires the information of the photographed time of the latest past picture data among the past picture data for the target section.
When the picture data storing unit 21 stores only the latest provision target picture data for each section as mentioned above, the past corresponding map data setting unit 42 may extract the picture data of the target section as the past picture data from the picture data storing unit 21 and acquire the information of the photographed time of the past picture data.
In addition, in the present embodiment, the past corresponding map data setting unit 42 further acquires the information of the photographed time of the past picture data of a scale corresponding to the scale of the determination target picture data.

### <Past corresponding map data acquisition>

In the present embodiment, the past corresponding map data setting unit 42 acquires, as the past corresponding map data, the map data of the same section as the determination target picture data associated with the information of the created time closest to the photographed time of the past picture data, from the map data storing unit 20.
In addition, the past corresponding map data setting unit 42 may acquire, as the past corresponding map data, the map data of the same section as the determination target picture data associated with the information of the latest created time before the photographed time of the past picture data, or the map data of the same section as the determination target picture data associated with the information of the oldest created time after the photographed time of the past picture data. Or, when the usage time of the map data included in the picture data provision system 1 or the picture using device 50 is set using the created time of the map data as a reference, the past corresponding map data setting unit 42 acquires, as the past corresponding map data, the map data associated with the information of the created time with which the usage time of the map data includes the photographed time of the past picture data.
In addition, in the present embodiment, the past corresponding map data setting unit 42 further acquires, as the past corresponding map data, the map data of a scale corresponding to (preferably, the same scale as) the scale of the determination corresponding map data, from the map data storing unit 20.
When the determination target picture data or the determination corresponding map data is for a plurality of sections, the information of the photographed time of the past picture data and the past corresponding map data are acquired for each section.

### 1-6. Map data difference determining unit 43

The provision determining unit 31 is a function part that executes a map data difference determining process to determine a difference between the determination corresponding map data and the past corresponding map data that is the map data of the section of the ground surface area corresponding to the past picture data.
In the present embodiment, the map data difference determining unit 43 determines a difference between the determination corresponding map data and the past corresponding map data with respect to the features included in the map data.
The data of the features included in the map data includes data of roads, facilities, and geographic features, as mentioned above. The map data difference determining unit 43 determines a difference with respect to roads, facilities geographic features as features included in the map data. The map data difference determining unit 43 determines the difference between the determination corresponding map data and the past corresponding map data based on the presence or absence of a change in roads, facilities and geographic features. For example, regarding roads, when there is an increase or decrease, or a change in a road, a road width, the number of lanes, an intersection, a bridge, a tunnel, a paint indicator, a traffic light, or the like, the map data difference determining unit 43 determines that there is a difference. Regarding facilities, when there is an increase or decrease, or a change in a building, a parking lot, a park, or the like, the map data difference determining unit 43 determines that there is a difference. Regarding the geographic features, when there is an increase or decrease, or a change in a river, reclaimed ground, a coastal line, the map data difference determining unit 43 determines that there is a difference.

In the present embodiment, the map data difference determining unit 43 changes, according to the scale of the determination target picture data, the data target to determine the difference among a plurality of pieces of data forming the map data.
In the present embodiment, as mentioned above, the determination corresponding map data and the past corresponding map data of a scale corresponding to the scale of the determination target picture data is set. As the scale of the map data increases, features of smaller sizes are included in the map data. Therefore, the map data difference determining unit 43 sets the features target to determine the difference according to the scale of the determination target picture data such that the features of smaller sizes are target as the scale of the determination target picture data increases. That is, when the scale of the determination target picture data is small, the features of larger sizes are included in the determination corresponding map data and the past corresponding map data. Therefore, the map data difference determining unit 43 determines the difference in the features of larger sizes. When the scale of the determination target picture data is large, the features of both small and large sizes are included in the determination corresponding map data and the past corresponding map data. Therefore, the map data difference determining unit 43 determines the difference in the features of both small sizes and large sizes.

In the present embodiment, the map data difference determining unit 43 determines the difference with respect to at least one of roads, facilities, and geographic features as the features included in the map data. Roads, facilities, and geographic features target to determine the difference are set according to the scale of the determination target picture data such that, as the scale of the determination target picture data increases, for example; regarding roads, roads of lower levels, roads with narrow widths, roads with less number of lanes become target; regarding facilities, facilities of less dimensions become target; and regarding geographic features, geographic features having areas of less dimensions, geographic features with shorter lengths, and geographic features of lower levels become target.
The map data difference determining unit 43 may determine the target to determine the difference independently of the scale of the determination target picture data.
When the determination target picture data is for a plurality of sections, the difference between the determination corresponding map data and the past corresponding map data corresponding to each section is determined.

### 1-7. Provision determining unit 31

The provision determining unit 31, as mentioned above, is a function part that executes a provision determining process to determine whether the determination target picture data is recognized as the provision target picture data that is target to provide to the picture using device 50, based on the feature information included in the determination corresponding map data and the determination result of the recognition difficult portion of the determination target picture data.
In the present embodiment, the provision determining unit 31, as mentioned above, determines whether the determination target picture data is recognized as the provision target picture data, based on the rating of the determination target picture data that is calculated based on the determination result of the recognition difficult portion and the importance level of each portion of the determination target picture data.

In the present embodiment, the provision determining unit 31, as mentioned above using the flowchart in FIG. 4, determines the difference between the determination corresponding map data and the past corresponding map data that is the map data of the ground surface area corresponding to the past picture data. When it has been determined that there is the difference, the provision determining unit 31 determines whether the determination target picture data is recognized as the provision target picture data, based on the comparison result between the rating of the determination target picture data and a predetermined determination criterion. On the other hand, when it has been determined that there is not the difference, the provision determining unit 31 determines whether the determination target picture data is recognized as the provision target picture data, based on the comparison result between the rating of the determination target picture data and the rating of the past picture data.
The provision determining unit 31 outputs to the picture data providing unit 32 the judgment result of whether the determination target picture data is recognized as the provision target picture data.

In the present embodiment, when the score of the determination target picture data is larger than a predetermined determination reference point (for example, 30 points), the provision determining unit 31 determines that the rating of the determination target picture data is higher than the determination criterion and determines that the determination target picture data is recognized as the provision target picture data. On the other hand, when the score of the determination target picture data is equal to or smaller than the predetermined determination reference point, the provision determining unit 31 determines that the rating of the determination target picture data is lower than the predetermined determination criterion; therefore, the provision determining unit 31 determines that the determination target picture data is not recognized as the provision target picture data.

In addition, in the present embodiment, when the score of the determination target picture data is larger than the score of the past picture data, the provision determining unit 31 determines that the rating of the determination target picture data is higher than the rating of the past picture data and determines that the determination target picture data is recognized as the provision target picture data.
In the present embodiment, when the score of the determination target picture data is larger than the score of the past picture data and the difference of the point between the score of the determination target picture data and the score of the past picture data (= score of determination target picture data - score of past picture data) is equal to or larger than a predetermined threshold value (for example, 10 points), the provision determining unit 31 determines that the rating of the determination target picture data is higher than the rating of the past picture data and determines that the determination target picture data is recognized as the provision target picture data. On the other hand, even when the score of the determination target picture data is larger than the score of the past picture data, if the difference of the point between the score of the determination target picture data and the score of the past picture data is smaller than the predetermined threshold value, the provision determining unit 31 determines that the determination target picture data is not recognized as the provision target picture data.

### 1-8. Picture data providing unit 32

The picture data providing unit 32 is a function part that executes a determined picture data providing process to provide to the picture using device 50 the provision target picture data that is determination target picture data determined to provide by the provision determining unit 31.
In the embodiment, when the provision determining unit 31 determines that the determination target picture data is recognized as the provision target picture data that is target to provide to the picture using device 50, the picture data providing unit 32 stores the provision target identification information, which is information to identify whether it has been determined that the picture data is recognized as the provision target picture data, in association with the picture data corresponding to the provision target picture data in the picture data storing unit 21.
In the present embodiment, when the provision is determined, the picture data providing unit 32 upgrades the version of the section corresponding to the provision target picture data and stores in the picture data storing unit 21, the version information after upgrade such that the version information is included in the information of the photographed time of the picture data corresponding to the provision target picture data. That is, the picture data providing unit 32 extracts the version information of the picture data for the same section as the section of the provision target picture data from the picture data storing unit 21, upgrades the extracted version information, and stores in the picture data storing unit 21 the version information after upgrade in association with the picture data determined to provide.

When the picture data storing unit 21 stores only the provision target picture data with the latest photographed time for each section, the picture data providing unit 32: deletes the picture data, the information of the photographed time, the version information of the same section as the section determined that there is the difference in the picture data storing unit 21; and stores in the picture data storing unit 21 the provision target picture data, the information of the photographed time, the version information of the section determined that there is the difference.

The picture data providing unit 32 provides to the picture using device 50 the provision target picture data stored in the picture data storing unit 21.
When the picture using device 50 have placed a provision request of the picture data, the picture data providing unit 32 extracts the provision target picture data, the information of the photographed time, and the version information for the requested section from the picture data storing unit 21 and provides the extracted data and information to the picture using device 50. The provision of the picture data from the picture data providing unit 32 to the picture using device 50 is executed through a communication network, a storage medium, or the like.

### 1-9. Abstract of the picture data providing process

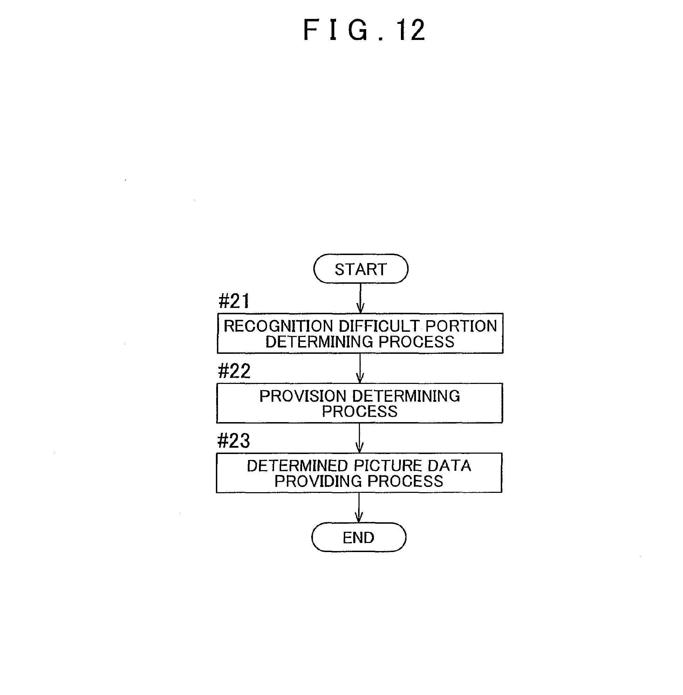

The abstract of a picture data providing process is explained with reference to the flowchart shown in FIG. 12.
Firstly, the recognition difficult portion determining unit 30 executes the recognition difficult portion determining process to determine a recognition difficult portion of the determination target picture data (Step #21).
Next, the provision determining unit 31 executes the provision determining process to determine whether the determination target picture data is recognized as the provision target picture data based on the feature information included in the determination corresponding map data and the determination result of the recognition difficult portion of the determination target picture data (Step #22). Here, the provision determining process may be configured as shown in the flowchart of FIG. 2.
The picture data providing unit 32 executes the determined picture data providing process to provide the provision target picture data to the picture using device 50 (Step #23).

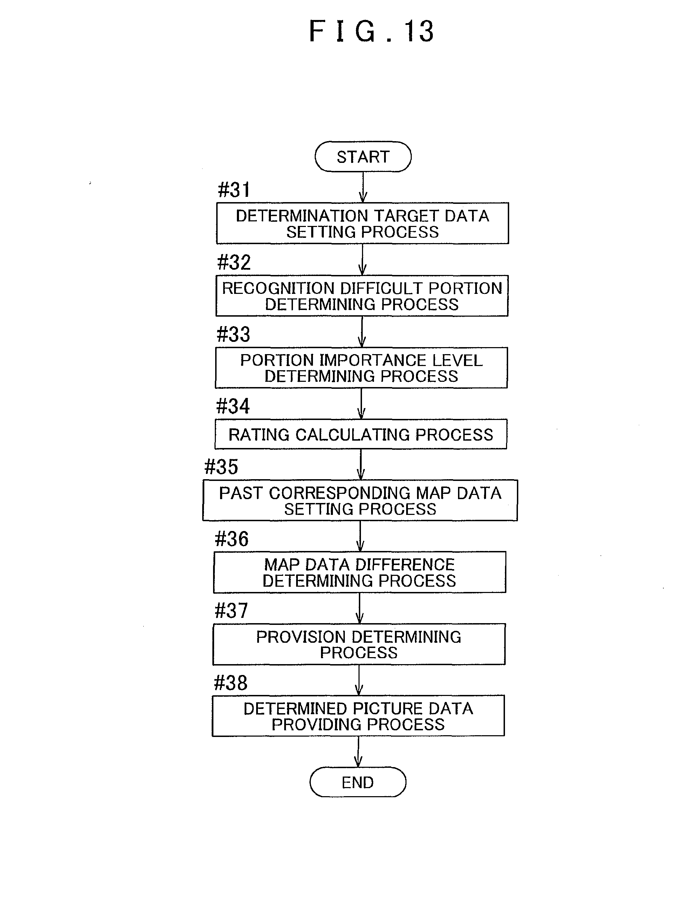

Next, the picture data providing process according to the present embodiment is explained with reference to the flowchart shown in FIG. 13.
The determination target data setting unit 33 executes the determination target data setting process to set the determination target picture data and the determination corresponding map data (Step #31).
Next, the recognition difficult portion determining unit 30 executes the recognition difficult portion determining process to determine the recognition difficult portion of the determination target picture data (Step #32).
The portion importance level determining unit 34 executes the portion importance level determining process to determine the importance level of each section of the determination target picture data based on the feature information included in the determination corresponding map data (Step #33).
The picture data rating unit 35 executes the rating calculating process to calculate the rating of the determination target picture data based on the determination result of the recognition difficult portion and the importance level of each portion of the determination target picture data (Step #34). The picture data rating unit 35 also calculates the rating of the past picture data.
Next, the past corresponding map data setting unit 42 executes the past corresponding map data setting process to set the past corresponding map data corresponding to the past picture data (Step #35).
The map data difference determining unit 43 executes the map data difference determining process to determine the difference between the determination corresponding map data and the past corresponding map data (Step #36).
The provision determining unit 31 executes the provision determining process to determine whether the determination target picture data is recognized as the provision target picture data that is target to provide to the picture using device 50 based on the determination result of the map data difference determining process and the rating of the determination target picture data and the rating of the past picture data, by executing the process as shown in the flowchart of Fig. 4 (Step #37).
The picture data providing unit 32 executes the determined picture data providing process to provide the provision target picture data determined to provide by the provision determining unit 31 to the picture using device 50 (Step #38).

The processes from the start to the end shown in the flowcharts of FIG. 12 and FIG. 13 are repeatedly executed. The process from Step #21 to Step #23 and the process from Step #31 to Step #38 may be repeatedly executed for each section of the determination target picture data or the determination corresponding map data until the processes are executed for all sections.

### <Picture data acquisition following process (when new picture data has been acquired) >

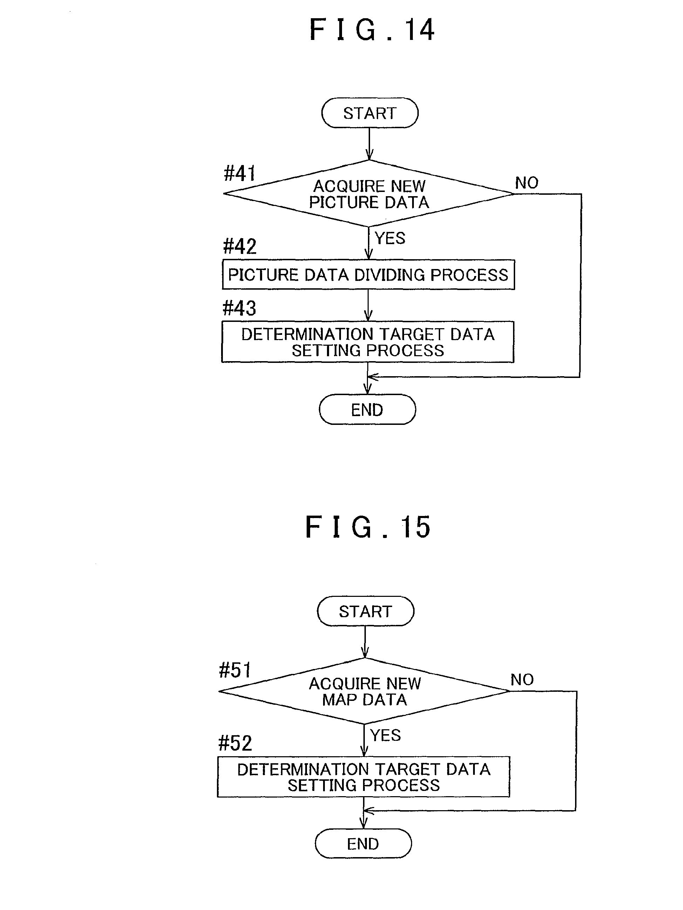

Next, the determination target data setting process at Step #31 when the picture data acquisition following process is executed is explained with reference to the flowchart shown in FIG. 14.
When the new picture data has been acquired (Step #41: YES), the picture data provision system 1 starts the picture data providing process.
The picture data dividing unit executes the picture data dividing process to divide the new picture data into the sections corresponding to the sections of the map data (Step #42).
The determination target data setting unit 33 executes the determination target data setting process to set the new picture data of each section as the determination target picture data and acquire the map data corresponding to the determination target picture data as the determination corresponding map data from the map data storing unit 20 (Step #43).

<Map data acquisition following process (when the new map data has been acquired) >
Next, the determination target data setting process at Step #31 when the map data acquisition following process is executed is explained with reference to the flowchart shown in FIG. 15.
When the new map data has been acquired (Step #51: YES), the picture data provision system 1 starts the picture data providing process.
The determination target data setting unit 33 executes the determination target data setting process to set the new map data of each section as the determination corresponding map data and acquire the picture data corresponding to the determination corresponding map data as the determination target picture data from the picture data storing unit 21 (Step #52).

### 2. Picture using device 50

The picture using device 50 is a device that uses the picture data provided from the picture data providing unit 32. Typically, the picture using device 50 uses the provided picture data by displaying the data on a display device. For example, the picture using device 50 includes a navigation function, a map display function, and the like. The picture using device 50 having such function may be, for example, a navigation device, a multifunctional portable phone, a portable information terminal device, a personal computer, or the like.

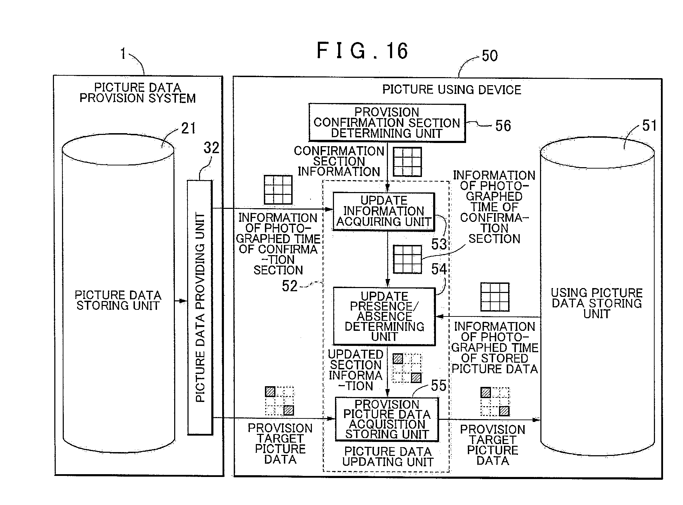

The picture using device 50 is provided with a using picture data storing unit 51, a picture data updating unit 52, and the like, as shown in FIG. 16.
When a picture data update start condition is met, the picture using device 50 executes a picture data updating process using the picture data updating unit 52 or the like.
As the picture data update start condition, various conditions may be set.
For example, the picture using device 50 may determine that the picture data update start condition has been met every time a predetermined time period elapses. The picture using device 50 may determine that the picture data update start condition has been met when a user of the picture using device 50 has requested the execution of the picture data updating process. The picture using device 50 may determine that the picture data update start condition has been met when information indicating that provision target picture data had been newly determined has been received from the picture data provision system 1.

The using picture data storing unit 51 stores the picture data of each section provided from the picture data providing unit 32 in association with the information (including version information) of the photographed time of the picture data.
The picture data updating unit 52 compares for each section between the photographed time or the version of the new picture data that is the picture data provided from the picture data providing unit 32 and the photographed time or the version of the picture date stored in the using picture data storing unit 51. When it has been determined that the photographed time of the new picture data is newer, the new picture data is stored in the using picture data storing unit 51.

The picture using device 50 includes an arithmetic processing device such as a CPU as a core member as well as a storage device such as a RAM (Random Access Memory) that is capable of reading or writing data from or in the arithmetic processing device, a ROM (Read Only Memory) that is capable of reading data from the arithmetic processing device, and the like. Respective function parts 52 of the picture using device 50 are mounted as software (program) stored in the ROM of the picture data provision system 1 or the like, or hardware such as a separately provided arithmetic circuit or the like, or as hardware and software. A picture data using program to cause the arithmetic processing device realize the functions of the respective function parts 52 is stored in the storage medium such as the RAM, the ROM or the like, which are capable of referring to the arithmetic processing device.

### 2-1. Using picture data storing unit 51

The using picture data storing unit 51 stores the picture data of each section provided from the picture data providing unit 32 in association with the information (including the version information) of the photographed time of the picture data.
The using picture data storing unit 51 is provided in a storage device such as a hard disk, a flash memory, or the like, which are provided in the picture using device 50.
In the present embodiment, the using picture data storing unit 51 stores only picture data with the latest photographed time or version for each section. The using picture data storing unit 51 may cumulatively store the picture data with the past photographed time or version as well as the picture data with the latest photographed time or version for each section.

In addition, the using picture data storing unit 51 stores a plurality of pieces of picture data of different scales and resolutions for the same ground surface area. The using picture data storing unit 51 stores the picture data of each scale and resolution for each section in association with the information (including the version information) of the photographed time of the picture data.

### 2-2. Provision confirmation section determining unit 56

In the present embodiment, the picture using device 50 is provided with a provision confirmation section determining unit 56, as shown in FIG. 16. The provision confirmation section determining unit 56 is a function part that executes a provision confirmation section determining process to determine a confirmation section that is a section to confirm the presence or absence of a provision of the provision target picture data when the picture data update start condition has been met.
If the presence or absence of the latest provision target picture data is determined for all sections, for example, the sections of whole Japan, which are stored in the picture data storing unit 21, the updating cost such as the communication cost and time, the processing time, and the like increases. Therefore, in the present embodiment, the picture using device 50 executes the provision confirmation section determining process using the provision confirmation section determining unit 56. The picture using device 50 determines for the confirmation sections whether to acquire the latest provision target picture data from the picture data storing unit 21, and acquires, for the section(s) determined to acquire among the confirmation sections, the latest provision target picture data from the picture data storing unit 21.

For example, the confirmation section may be set to the sections corresponding to the ground surface area that is set by the user of the picture using device 50. Or, the ground surface area may be set by administrative section. Or, the confirmation section may be set to the section corresponding to the ground surface area for which the user intends to display the picture data using the picture using device 50. Or, when the picture using device 50 is capable of acquiring the information of the position on the ground surface of the picture using device 50 such as navigation devices, multifunctional portable phones, and the like, the confirmation section may be set to the section corresponding to the ground surface area including the current position of the picture using device 50 or the section corresponding to the ground surface area where the history of position is frequent (the ground surface area where the total number of times the respective points in the ground surface area were utilized is greater than a predetermined threshold value). When the picture using device 50 includes a navigation function, executes route search from a departure point to a destination, and provides navigation guidance along the route; the confirmation section may be set to the section corresponding to the ground surface area along the route.
The provision confirmation section determining unit 56 outputs the information of the determined confirmation section(s) (section identification signs) to the picture data updating unit 52.

### 2-3. Picture data updating unit 52

The picture data updating unit 52, which is provided with an update information acquiring unit 53, an update presence/absence determining unit 54, and a provision picture data acquisition storing unit 55, is a function part that executes the picture data updating process, as shown in FIG. 16.

### 2-3-1. Update information acquiring unit 53

The update information acquiring unit 53 is a function part that executes an update information acquiring process to acquire, through the picture data providing unit 32, the information (including the version information) of the photographed time of the latest provision target picture data among the provision target picture data stored for each section in the picture data storing unit 21.

In the present embodiment, the update information acquiring unit 53 acquires the information of the photographed time of the latest provision target picture data only for the confirmation section(s) among the latest provision target picture data for all sections stored in the picture data storing unit 21.

### 2-3-2. Update presence/absence determining unit 54

The update presence/absence determining unit 54 is a function part that executes an update presence/absence determining process to compare for each section between the photographed time or the version of the picture data stored in the using picture data storing unit 51 and the photographed time or the version of the provision target picture data acquired by the update information acquiring unit 53 and determine the section(s) for which the photographed time or the version of the provision target picture data is newer.
In the present embodiment, the update presence/absence determining unit 54 extracts the information (including the version information) of the photographed time of the picture data for the confirmation section(s) from the using picture data storing unit 51. The update presence/absence determining unit 54 compares for each confirmation section between the photographed time or the version of the picture data extracted from the using picture data storing unit 51 and the photographed time or the version of the provision target picture data and determines the section(s) for which the photographed time or the version of the provision target picture data is newer. The update presence/absence determining unit 54 outputs the information (the section identification sign) of the section(s) for which the provision target picture data is newer among the confirmation section(s) to the provision picture data acquisition storing unit 55.

### 2-3-3. Provision picture data acquisition storing unit 55

The provision picture data acquisition storing unit 55 is a function part that executes a provision picture data acquisition storing process to acquire the latest provision target picture data from the picture data providing unit 32 for the section(s) for which the photographed time or the version of the provision target picture data is newer and store the acquired data in the using picture data storing unit 51.
In the present embodiment, the provision picture data acquisition storing unit 55 acquires through the picture data providing unit 32 the latest provision target picture data and the information (including the version information) of the photographed time for the section(s) for which the provision target picture data is newer among the latest provision target picture data for all sections stored in the picture data storing unit 21.
The provision picture data acquisition storing unit 55 stores the acquired provision target picture data in association with the information (including the version information) of the photographed time in the using picture data storing unit 51.
In the present embodiment, only the picture data of the latest photographed time or version is stored for each section in the using picture data storing unit 51. Therefore, the provision picture data acquisition storing unit 55: deletes the picture data (the past picture data) for the same section as the section determined that the provision target picture data is newer and the information (including the version information) of it's photographed time from the using picture data storing unit 51; and stores the provision target picture data for the section(s) determined as being newer and the information (including the version information) of its photographed time in the using picture data storing unit 51.
When the using picture data storing unit 51 cumulatively stores the past picture data as well as the latest picture data for each section, the provision picture data acquisition storing unit 55 may not delete the past picture data and the information of the photographed time from the using picture data storing unit 51.

### 2-4. Abstract of picture data updating process of picture using device 50

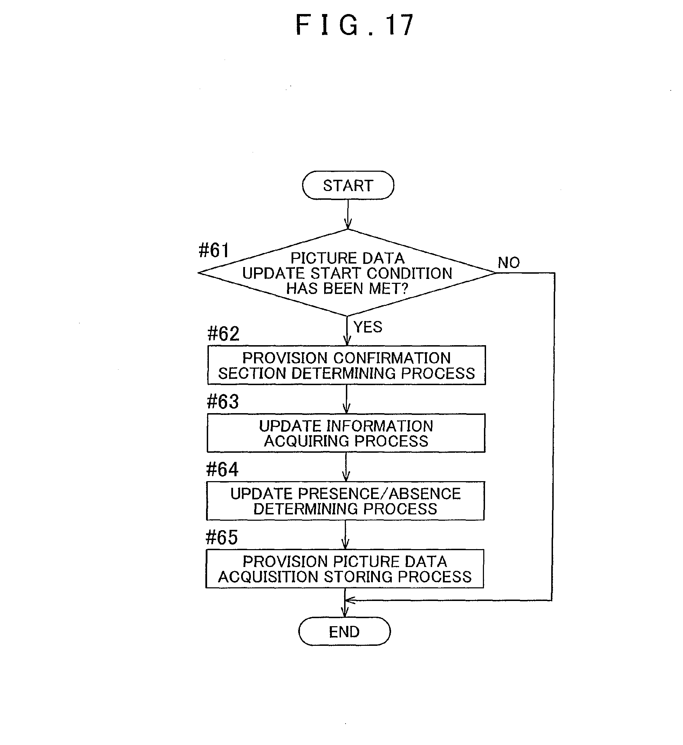

The abstract of the picture data updating process of the picture using device 50 is explained with reference to the flowchart shown in FIG. 17.
When the picture data update start condition has been met (Step #61: Yes), the picture using device 50 starts a series of picture data updating processes.
The provision confirmation section determining unit 56 executes the provision confirmation section determining process to determine the confirmation section (Step #62).
The update information acquiring unit 53 executes the update information acquiring process to acquire the information (including the version information) of the photographed time of the latest provision target picture data from the picture data providing unit 32 (Step #63).
The update presence/absence determining unit 54 executes the update presence/absence determining process to determine the section(s) for which the photographed time or the version of the provision target picture data is newer (Step #64).
The provision picture data acquisition storing unit 55 executes the provision picture data acquisition storing process to acquire the latest provision target picture data from the picture data providing unit 32 for the section(s) determined as being newer and store the acquired data in the using picture data storing unit 51 (Step #65).
The processes from the start to the end shown in the flowchart of FIG. 17 is repeatedly executed.

The present invention may be utilized to picture data provision systems that provide picture data of ground surface photographed from high in the sky to picture using devices.

While various features have been described in conjunction with the examples outlined above, various alternatives, modifications, variations, and/or improvements of those features and/or examples may be possible. Accordingly, the examples, as set forth above, are intended to be illustrative. Various changes may be made without departing from the broad spirit and scope of the underlying principles.
A picture data provision system providing picture data of ground surface photographed from high in a sky to a picture using device comprises means for determining a recognition difficult portion based on determination target picture data that is target to determine whether to provide, the recognition difficult portion being a portion of the determination target picture data where the ground surface is difficult to recognize, means for determining whether the determination target picture data is recognized as provision target picture data that is target to provide to the picture using device, based on feature information and a determination result of the recognition difficult portion of the determination target picture data, and means for providing the provision target picture data to the picture using device.

## Claims

1. A picture data provision system (1) providing picture data of ground surface photographed from high in a sky to a picture using device (50), the picture data provision system (1) comprising:
a recognition difficult portion determining unit (30) adapted to determine a recognition difficult portion based on determination target picture data that is target to determine whether to provide, the recognition difficult portion being a portion of the determination target picture data where the ground surface is difficult to recognize;
a provision determining unit (31) adapted to determine whether the determination target picture data is recognized as provision target picture data that is target to provide to the picture using device (50), based on feature information and a determination result of the recognition difficult portion determining unit (30) of the determination target picture data, the feature information being information regarding a feature included in determination corresponding map data and including position information of each feature, the determination corresponding map data being map data of a ground surface area corresponding to the determination target picture data; and
a picture data providing unit (32) adapted to provide the provision target picture data to the picture using device (50).

2. The picture data provision system (1) according to claim 1, comprising
a portion importance level determining unit (34) adapted to determine an importance level of each portion of the determination target picture data based on the feature information; and
a picture data rating unit (35) adapted to calculate a rating of the determination target picture data based on the determination result of the recognition difficult portion determining unit (30) and the importance level of each portion of the determination target picture data such that the rating decreases as the importance level of the recognition difficult portion increases, wherein
the provision determining unit (31) is adapted to determine based on the rating whether the determination target picture data is recognized as the provision target picture data.

3. The picture data provision system according to claim 2, wherein
the picture data rating unit (35) is adapted to calculate a rating of past picture data based on the determination result of the recognition difficult portion determining unit (30) and the importance level of each portion such that the rating decreases as the importance level of the recognition difficult portion increases, the past picture data being picture data of the ground surface area corresponding to the determination target picture data provided earlier than the determination target picture data, and
the provision determining unit (31) is adapted to determine whether the determination target picture data is recognized as the provision target picture data, based on a comparison result between the rating of the determination target picture data and the rating of the past picture data.

4. The picture data provision system (1) according to claim 3, further comprising:
a map data difference determining unit (43) adapted to determine a difference between the determination corresponding map data and past corresponding map data that is map data of a ground surface area corresponding to the past picture data, wherein:
when it has been determined that there is the difference, the provision determining unit (31) is adapted to determine whether the determination target picture data is recognized as the provision target picture data, based on a comparison result between the rating of the determination target picture data and a predetermined determination criterion; and
when it has been determined that there is not the difference, the provision determining unit (31) adapted to determine whether the determination target picture data is recognized as the provision target picture data, based on a comparison result between the rating of the determination target picture data and the rating of the past picture data.

5. The picture data provision system (1) according to any one of claims 2 to 4, wherein
the feature information further includes attribute information indicating an attribute of each feature, and
the portion importance level determining unit (34) is adapted to determine the importance level of each portion of the determination target picture data based on the attribute of the feature included in each portion of the determination corresponding map data.

6. The picture data provision system (1) according to claim 5, wherein:
the feature includes a road and/or a facility;
the feature information includes at least one of a road type, a number of lanes, and a road width as the attribute information indicating the attribute of the road and/or at least one of a facility type and a facility dimension as the attribute information indicating the attribute of the facility; and
the portion importance level determining unit (34) is adapted to determine the importance level based on at least one of the road type, the number of lanes, and the road width of a road included in each portion of the determination corresponding map data and/or at least one of the facility type and the facility dimension of a facility included in each portion of the determination corresponding map data.

7. The picture data provision system (1) according to any one of claims 2 to 6, wherein
the portion importance level determining unit (34) is adapted to determine a portion score as the importance level of each portion based on the feature information of the feature included in the determination corresponding map data, and
the picture data rating unit (35) is adapted to calculate a total score based on a total of the portion score corresponding to each recognition difficult portion and calculates the rating based on the total score.

8. The picture data provision system (1) according to any one of claims 2 to 7, wherein
the portion importance level determining unit (34) is adapted to determine the importance level of each portion, the portion being an area set by dividing the determination target picture data in a reticular pattern.

9. A picture data provision method to provide picture data of ground surface photographed from high in a sky to a picture using device, the picture data provision method comprising the steps of:
determining a recognition difficult portion based on determination target picture data that is target to determine whether to provide, the recognition difficult portion being a portion of the determination target picture data where the ground surface is difficult to recognize;
determining whether the determination target picture data is recognized as provision target picture data that is target to provide to the picture using device, based on feature information and a determination result of the recognition difficult portion of the determination target picture data, the feature information being information regarding a feature included in determination corresponding map data and including position information of each feature, the determination corresponding map data being map data of a ground surface area corresponding to the determination target picture data; and
providing the provision target picture data to the picture using device.

10. A computer program product including a program for a processing device, comprising software code portions for performing the steps according to claim 9 when the program is run on the processing device.

11. The computer program product according to claim 10, wherein the computer program product comprises a computer-readable medium on which the software code portions are stored.

12. The computer program product according to claim 10, wherein the program is directly loadable into an internal memory of the processing device.
